# EUROPÄISCHE PATENTSCHRIFT

(11) **EP 4 127 660 B1**
(45) Veröffentlichungstag und Bekanntmachung des Hinweises auf die Patenterteilung: **02.10.2024**
(21) Anmeldenummer: 21717331.9
(22) Anmeldetag: 25.03.2021
(51) Int. Cl.: G01N 21/03, G01N 21/05, G01N 21/31

(54) **DUALE MESSVORRICHTUNG ZUR BESTIMMUNG DER BESCHAFFENHEIT EINES GASES, IHRE VERWENDUNG SOWIE FORTBEWEGUNGSMITTEL MIT EINER SOLCHEN**
DUAL MEASURING DEVICE FOR DETERMINING THE QUALITY OF A GAS, USE THEREOF, AND MEANS OF TRANSPORTATION COMPRISING SUCH A MEASURING DEVICE
DISPOSITIF DE MESURE DOUBLE POUR DÉTERMINER LA QUALITÉ D'UN GAZ, UTILISATION ASSOCIÉE ET MOYEN DE TRANSPORT COMPRENANT UN TEL DISPOSITIF DE MESURE

(30) Priorität: 30.03.2020 DE 102020108769
(43) Veröffentlichungstag der Anmeldung: 08.02.2023
(73) Patentinhaber: VOLKSWAGEN AG, 38440 Wolfsburg (DE)
(72) Erfinder: ZLATKOV, Branislav, 38104 Braunschweig (DE)
(74) Vertreter: Gulde & Partner
(86) Internationale Anmeldenummer: PCT/EP2021/057805
(87) Internationale Veröffentlichungsnummer: WO 2021/198032

(56) Entgegenhaltungen:
- WO-A1-2004/051240
- WO-A1-99/57584
- DE-A1- 102008 001 711
- DE-A1- 102008 044 171
- DE-A1- 102017 126 612
- JP-A- H07 198 600
- US-A- 4 228 352
- US-A- 5 604 587
- US-A1- 2003 090 665
- US-A1- 2013 250 304
- US-A1- 2017 219 479
- LAMBRECHT A ET AL: "Hollow fibers for compact infrared gas sensors", PROCEEDINGS OF SPIE, IEEE, US, vol. 6901, 7 February 2008 (2008-02-07), pages 69010V - 1, XP002578001, ISBN: 978-1-62841-730-2, DOI: 10.1117/12.761539

## Beschreibung

Die Erfindung betrifft eine duale Messvorrichtung zur Detektion eines Gases oder Gasgemischs und dessen Temperatur. Die Erfindung betrifft ferner Verwendungen der Messvorrichtung in mobilen Anwendungen sowie ein Fortbewegungsmittel, das eine solche duale Messvorrichtung umfasst.

Verschiedene Anwendungsgebiete und -fälle von Messvorrichtung zur Detektion von Eigenschaften von Gasen sind auf die Messung intensiver und extensiver Zustandsgrößen des Gases gerichtet. Häufig liegt das Ziel einer Messung zum einen in der qualitativen Bestimmung der unterschiedlicher Bestandteile des Gases sowie in der quantitativen Messung der Stoffmenge bzw. Konzentration des Bestandteiles des Gases . Zum anderen ist häufig der Bestimmung und Messung der Temperatur des Gases gewünscht. Damit einher geht auch, dass bei technischen Anlagen in einer Vielzahl von Fällen an unterschiedlichen Stellen des Systems aufgrund ablaufender verfahrenstechnischer oder energetischer Prozesse unterschiedliche Zustände und somit unterschiedliche Zusammensetzungen und Temperaturen vorliegen. Demzufolge sind zur Steuerung eines Prozesses die verschiedenen Zustände zu erfassen und zu überwachen. Das bedingt schließlich auch eine Mehrzahl an Vorrichtungen zur Messung der eingangs erwähnten Größen.

Betrachtet man beispielsweise ein Fahrzeug, das mit einem Diesel-Motor ausgestattet ist, werden an mehreren Stellen des Abgastrakts Sensoren zur Messung der Zusammensetzung des Abgases sowie dessen Temperatur eingesetzt. Die Gründe hierfür liegen im Wesentlichen darin, einen optimalen Betrieb hinsichtlich der Effizienz des Motors zu gewährleisten, was zum Beispiel dadurch erreicht wird, dass entsprechend der Abgaszusammensetzung und -temperatur eine geeignete Zufuhr von Verbrennungsluft bestimmt und gesteuert werden kann. Andere im Fokus stehende Gründe betreffen die Einhaltung der Grenzwerte für im Abgas enthaltene Schadstoffe.

So ist es üblich, mindestens vier einzelne Sensoren zur Messung der Gaszusammensetzung bezüglich Sauerstoff- sowie Stickoxid-Gehalte einzusetzen. Hinzu kommen noch mindestens vier einzelne Sensoren, die an diversen Stellen die Temperatur des Abgases erfassen sollen. Damit verbunden ist für jeden einzelnen Sensor ein gewisses Maß an Ausstattung mit Elektronik, Auswerteeinheiten und natürlich Einbau und Montage sowie Wartung.

Bedingt durch den wirtschaftlichen und logistischen Aufwand für Entwicklung, Herstellung, Versand, Montage, Verbindung an Steuer- und Auswertegeräte und anschließende Kalibrierung jedes einzelnen Sensors besteht Bedarf an Optimierung.

Während des Betriebs besteht zudem die Möglichkeit auftretender Fehlfunktionen und Ausfälle der Sensoren. Verstärkt wird dieser Effekt durch gegenseitige elektromagnetische Beeinflussung, die einen gesteigerten Aufwand an Schutzmaßnahmen und Bauteilen zur Verringerung der gegenseitigen Beeinflussung verursachen.

Auch erwähnt werden, soll hier die durch die hohe Anzahl an Sensoren verursachte Masse, beispielsweise eines Fahrzeugs, was zu einem erhöhten Energieverbrauch führt.

Sensoren zur Detektion von Gasen sind in verschiedenen Ausführungen, die auf unterschiedlichen Messprinzipien basieren, bekannt. In Abgasanlagen von Fahrzeugen werden Festelektrolytsensoren eingesetzt, deren Messprinzip auf lonenleitung beruht. Diese Sensoren weisen einen komplexen Schichtaufbau auf, umfassend Keramikschichten, Elektroden und Heizelemente. In diesen Festelektrolytsensoren kommt es an den Platinelektroden zu elektrochemischen Reaktionen und Stoffströmen, insbesondere von Diffusion von Sauerstoff durch ZrO₂-Schichten. Die hierdurch verursachten Stromänderungen werden als Sensorsignal ausgegeben und in die Gaskonzentration umgerechnet. Die Festelektrolytsensoren benötigen Edelmetalle, wie Platin oder Rhodium und sind vergleichsweise teuer in ihrer Herstellung. Zudem benötigen sie hohe Arbeitstemperaturen und sind anfällig gegen Temperaturschocks und gegenüber Wassertropfen im Abgas. Schließlich erlauben diese Sensoren nur die Messung von wenigen Gaskomponenten, nämlich NO, NH₃ und O₂.

Andere Abgassensoren, die beispielsweise in Gasthermen Einsatz finden, beruhen auf Widerstandsänderungen.

In Bezug auf die Temperaturmessung des Gases existieren verschiedene Umsetzungsmöglichkeiten. Klassisch unterteilt werden sie in analoge und digitale Temperatursensoren. Unter den analogen Temperatursensoren finden sich beispielsweise Widerstandsthermometer. Ihnen liegt der Effekt zugrunde, dass sich elektrische Widerstände mit Veränderung der Temperatur ändern. Zur Gruppe der digitalen Temperatursensoren zählen unter anderem die sogenannten Thermoelemente.

JP H07 198600 A beschreibt ein Fourier-Transform-Mehrkomponenten-Absorptionsspektrometer. Dieses umfasst eine spiralförmige Gaszelle in Form eines schmalen Rohrs. Die Gaszelle weist an ihren beiden Enden Ein- und Auslässe auf, die zur Aufnahme und Verteilung eines Messgases dienen. Darüber hinaus verfügt die Gaszelle über lichtdurchlässige Fenster, die jeweils an einem Ende der Gaszelle angeordnet sind und über die Infrarotlicht in die Gaszelle eintritt.

LAMBRECHT et al.: "Hollow fibers for compact infrared gas sensors" offenbart optische Hohlleiterfasern, bei denen Messgas durch einen hohlen Faserkern strömt und Licht gleichzeitig in denselben Bereich geführt wird. Ein Filterphotometer mit gewickelter optischer Hohlleiterfaser umfasst eine Infrarot-Quelle an einem Ende der Hohlleiterfaser sowie einen Pyrodetektor mit einem optischen Filter an dem anderen Ende der Hohlleiterfaser. Des Weiteren sind an den beiden Enden jeweils Gasanschlüsse angeordnet.

US 4 228 352 A beschreibt eine Vorrichtung zur Messung der Konzentration von Gasen durch Strahlungsabsorption. Die Vorrichtung umfasst eine rohrförmige, helikal gewunden Messkammer. An einem Ende verfügt die Messkammer über einen Eingang für Licht, an einem anderen Ende ist ein Ausgang für die Strahlung zu einem Detektor angeordnet. Ferner verfügt die Messkammer über eine hochglänzende, reflektierende innere Oberfläche oder ist mit mehreren Schichten eines Materials vakuumbeschichtet.

DE 10 2008 001711 A1 beschreibt eine Sensoranordnung umfassend ein Innenelement in einem Reflexionsgehäuse mit einer Vielzahl von Reflexionsmodulen. Das Reflexionsgehäuse ist als ein langgestreckter, schraubenförmiger Hohlzylinder ausgebildet. Die Sensoranordnung weist an einem ersten Ende des Reflexionsgehäuses eine Emissionseinheit zur Aussendung von Strahlung und an einem zweiten Ende des Reflexionsgehäuses eine Detektionseinheit zum Empfang der Strahlung auf.

US 5 604 587 A beschreibt eine Zelle zur Verwendung bei der Messung der chemischen Eigenschaften von wässrigen Proben durch Raman-Spektroskopie. Eine Probe der Flüssigkeit wird dabei in einen kapillarförmigen Lichtwellenleiter geleitet. Anregungslicht wird axial in die Flüssigkeit an einem Ende des Wellenleiters übertragen. Das Anregungslicht wird durch Reflexion an der reflektierenden Oberfläche über die Länge des Wellenleiters übertragen, wodurch die Flüssigkeit Raman-Spektren aussendet.

WO 2004/051240 A1 offenbart einen Gassensor umfassend einen Körper, auf dem eine optische Quelle und ein für das Licht der Quelle empfindliches Detektormittel angebracht ist. Der Körper umfasst ferner einen Kanal in Form einer längliche Rille, die einen gefalteten optischen Pfad für Licht von der Quelle definiert.

WO 99/57584 A1 beschreibt einen optischen Wellenleiter mit flüssigem Kern für die Absorptionsspektroskopie. Der Wellenleiter besteht aus einem Rohrstück und einem Flüssigkeitskern, der in dem Rohrstück eingeschlossen ist.

DE 10 2008 044171 A1 beschreibt einen Sensor zur Messung der Konzentration eines Bestandteils eines Abgases, wobei der Sensor eine Lichtquelle, eine Messzelle und einen optischen Detektor umfasst. Der Sensor weist ein topfförmiges Gehäuse auf, innerhalb dessen sich eine zylindrische Messzelle befindet. Die Messzelle verfügt ferner über ein Fenster aus Quarzglas sowie einen Spiegel. Auf der Seite des Fensters weist die Messzelle eine Lichtquelle und einen optischen Detektor auf.

US 2003/090665 A1 beschreibt eine gasdurchlässige Sonde zur Verwendung in einem optischen Analysator für einen Abgasstrom. Der optische Analysator umfasst einen Lichtemitter und -empfänger und detektiert Gas basierend auf dessen Absorption eines eingestrahlten Lichts. Die gasdurchlässige Sonde besteht aus einer länglichen hohlen Struktur mit einem optischen Hohlraum. Zudem umfasst die Sonde ein Thermoelement, das die Temperatur der Oberfläche eines Filters misst.

DE 10 2017 126612 A1 beschreibt eine Messeinrichtung zur Analyse eines Messmediums. Die Messeinrichtung umfasst ein Sondengehäuse sowie eine Strahlungsquelle, deren Strahlung in eine außerhalb des Sondengehäuses angeordnete Messregion ein- und ausgekoppelt wird. Eine Empfängereinrichtung ist dazu eingerichtet, ausgekoppelte Messstrahlung zu erfassen und aus der erfassten Messstrahlung Ausgabedaten zu erzeugen. In einem Eintauchbereich des Sondengehäuses verläuft ein Wandungsbereich, in dem ein Temperatursensor angeordnet ist.

US 2017/219479 A1 beschreibt eine Ozonerkennungs-Vorrichtung. Diese umfasst eine Kammer, eine UV-Strahlungsquelle und einen UV-Detektor, wobei die Strahlungsquelle und der Detektor benachbart zueinander auf einer Seiter der Kammer angeordnet sind. Ein Gas wird der Kammer zugeführt. Ferner umfasst die Vorrichtung einen Temperatursensor, der an einem Gas-Einlass angeordnet ist.

US 2013/250304 A1 beschreibt ein Gasanalysegerät. Dieses umfasst einen Strömungskanal, der durch ein Gehäuse ausgebildet wird. Ein erster Abschnitt umfasst eine Strahlungsquelle und ein zweiter Abschnitt einen Detektor. Strahlungsquelle und Detektor sind über eine Strebe miteinander verbunden. Darüber hinaus verfügt das Analysegerät über einen ersten Temperatursensor, der in Nähe einer Gaszufuhr angeordnet ist und über einen zweiten Temperatursensor, der in der Nähe einer Gasabfuhr angeordnet ist.

Der Erfindung liegt nun die Aufgabe zugrunde, eine duale Messvorrichtung für die qualitative und bevorzugt auch quantitative Detektion von Gaskomponenten sowie die Messung der Temperatur des Gases bereitzustellen, die die genannten Nachteile des Stands der Technik zumindest teilweise überwindet. Die duale Messvorrichtung sollte insbesondere einfach und kostengünstig aufgebaut sein, in aggressiven Umgebungen wie verbrennungsmotorischen Abgasanlagen einsetzbar sein und zuverlässige Messergebnisse liefern. Idealerweise sollte die duale Messvorrichtung für unterschiedliche Gaskomponenten sensitiv sein, das heißt, mehrere Komponenten eines Gasgemischs qualitativ und bevorzugt auch quantitativ nebeneinander messen können. Zusätzlich zur Messung der Gaszusammensetzung ist die duale Messvorrichtung im Stande, die Temperatur des Gases an derselben Stelle zu messen.

Diese Aufgaben werden durch eine duale Messvorrichtung gemäß Anspruch 1 gelöst. Die Erfindung betrifft zudem gemäß Anspruch 13 die Verwendung der erfindungsgemäßen dualen Messvorrichtung. Weitere bevorzugte Ausgestaltungen der Erfindung ergeben sich aus den übrigen, in den abhängigen Ansprüchen genannten Merkmalen.

Die erfindungsgemäße duale Messvorrichtung zur Bestimmung der Beschaffenheit eines Gases umfasst einen Gassensor, dessen Aufgabe die Detektion eines Gases darstellt, d.h. seiner qualitativen und/oder quantitativen chemischen Zusammensetzung. Der Gassensor beinhaltet eine Kapillare, die spiralförmig (helikal) verläuft und die eine Kapillarwand aufweist, welche einen spiralförmig (helikal) verlaufenden Hohlraum umschließt. Die Kapillarwand ist ausgebildet, ein Austreten von elektromagnetischer Strahlung, die im Inneren der Kapillare strömt, zu unterdrücken, also zumindest entgegenzuwirken oder gänzlich zu verhindern. Ferner sind an einem ersten Ende der Kapillare ein Gaseinlass und an einem zweiten Ende der Kapillare ein Gasauslass angeordnet, sodass der Hohlraum mit dem zu messenden Gas befüllbar und/oder von einem solchen durchströmbar ist. Der Sensor umfasst ferner eine optische Einkopplungsstelle, die ausgebildet ist, eine elektromagnetische Strahlung in den Hohlraum der Kapillare einzukoppeln, und eine optische Auskopplungsstelle, die ausgebildet ist, die elektromagnetische Strahlung aus der Kapillare auszukoppeln. Hierbei können die optische Ein- und die Auskopplungsstelle gemeinsam an dem ersten oder zweiten Ende der Kapillare oder separat voneinander an den gegenüberliegenden Enden der Kapillare ausgebildet sein. Weiter umfasst die erfindungsgemäße duale Messvorrichtung einen Temperatursensor zur Messung der Temperatur des Gases, wobei der Temperatursensor innerhalb eines von der Kapillare umwickelten Volumens angeordnet ist.

Unter dem Begriff "Gas" oder auch "Messgas" wird vorliegend ein einzelnes Gas oder ein Gasgemisch aus mehreren Gaskomponenten verstanden. Unter dem Begriff "Beschaffenheit eines Gases" wird vorliegend eine chemische Eigenschaft des Gases, umfassend Art und/oder Konzentration einer oder mehrerer in dem Gas enthaltener Komponenten sowie thermodynamische Eigenschaften des Gases, mindestens umfassend die Temperatur des Gases, verstanden.

Weiterhin wird im Rahmen der vorliegenden Anmeldung unter dem Begriff "spiralförmig" ein helikaler, wendelförmiger oder schraublinienförmiger Verlauf verstanden, d.h. ein Verlauf um einen Zylindermantel. Dabei weist der Verlauf vorzugsweise eine im Wesentlichen konstante Steigung und einen im Wesentlichen konstanten Krümmungsradius auf.

Eine erfindungsgemäß ausgestaltete duale Messvorrichtung stellt somit eine Messzelle oder Küvette bereit, die mit dem zu vermessenden Gas (oder Gasgemisch) befüllt werden kann und die Detektion des Gases über die Abschwächung der Strahlungsintensität aufgrund von Absorption durch die Gasmoleküle erlaubt. Dabei lässt der Energiebereich (Spektralbereich) der Absorption einen Rückschluss auf die Art des Gases zu, also eine qualitative Bestimmung, während die Stärke der Absorption eine Aussage über die Konzentration des jeweiligen Gases erlaubt, also eine quantitative Bestimmung. Erfindungsgemäß strömen sowohl das zu vermessende Gas als auch die Messstrahlung durch die spiralförmige Kapillare innerhalb ihres Hohlraumes. Durch die Ausführung der Messzelle in Form einer spiralförmigen Kapillare wird ein besonders langer Lichtweg innerhalb des Gases und damit gemäß dem Lambert-Beer'schen-Gesetz eine besonders starke Extinktion ermöglicht. Hierdurch wird die Messgenauigkeit sehr hoch, sodass sich auch Gase in geringen Konzentrationen zuverlässig nachweisen lassen. Zusätzlich erlaubt eine derartig aufgebaute duale Messvorrichtung die zeitlich und örtlich gleichzeitige Messung der Temperatur des Gases durch den ebenfalls vorhandenen Temperatursensor.

Der Temperatursensor der erfindungsgemäßen dualen Messeinrichtung kann als analoger oder digitaler Temperatursensor ausgeführt sein. Analoge Temperatursensoren umfassen beispielsweise Widerstandsthermometer. Ihnen liegt der Effekt zugrunde, dass sich elektrische Widerstände mit Veränderung der Temperatur ändern. Als digitale Temperatursensoren eignen unter anderem sogenannten Thermoelemente. Sie basieren auf dem thermoelektrischen Effekt, auch Seebeck-Effekt genannt. Durch unterschiedliche Temperaturen und die dadurch entstehende Differenz, liegt zwischen den beiden Kontaktstellen eine Spannungsdifferenz vor, die gemessen wird und der sich im Anschluss eine Temperatur zuordnen lässt.

In bevorzugter Ausgestaltung umfasst die duale Messvorrichtung ein Gehäuse, das den Temperatursensor und/oder die Kapillare des Gassensors oder wenigstens einen Teil der beiden genannten Komponenten umgibt. Dadurch liegt ein separater Messraum vor, um diese Komponenten vor der Umgebung abzuschirmen und zu schützen. Dies kann aufgrund der Messtechnik, die häufig aus sensiblen technischen Bauteilen besteht, vorteilhaft sein. Das Gehäuse kann beliebig geformt sein. Es dient der teilweisen Bedeckung und Umschließung von Kapillare und/oder Temperatursensor und kann demzufolge einen Messraum definieren. Zusätzlich sollte es so ausgeführt sein, dass mittels verschiedener Fügeverfahren wie Schweißen, Löten oder Kleben weitere Bauteile von dem Mantel umschlossen werden können.

Gemäß einer alternativen bevorzugten Ausführung weist die duale Messvorrichtung ein Trägerteil auf, das ausgebildet ist, den Temperatursensor aufzunehmen und zu positionieren. Das Trägerteil kann einen beliebig geformten Mantel aufweisen. Der Mantel kann ebenfalls der teilweisen Bedeckung und Umschließung von Kapillare und/oder Temperatursensor dienen und so - gegebenenfalls in Verbindung mit dem genannten Gehäuse - einen Messraum definieren. Das Trägerteil kann unterschiedliche Formen aufweisen, so kann es beispielsweise eine rotationssymmetrische Form annehmen, aber auch asymmetrische Formen ausbilden. Es kann zum Beispiel einen röhrenförmigen Körper ausbilden und an einem Ende eine flanschartige Stufe aufweisen, die beispielsweise bündig an dem durch einen Mantel des optionalen Gehäuses definierten Messraum angeordnet ist. Zusätzlich kann das Trägerteil mit einem Befestigungsmechanismus versehen werden, um den Einbau des dualen Sensors an seinem gewünschten Einsatzort zu ermöglichen. Der Befestigungsmechanismus kann unter anderem ein außen an der Oberfläche des Trägerteils vorhandenes Gewinde zur Verschraubung darstellen aber auch andere Mechanismen ausnutzen. Das Trägerteil dient somit unter anderem der Stabilisierung der Sensoren der dualen Messvorrichtung und kann einen abgeschlossenen Messraum zum Schutz der technischen Bauteile bilden.

In einer weiteren bevorzugten Ausführung der Erfindung ist das Trägerteil als Durchführung ausgeführt. Dadurch ergibt sich eine konstruktiv einfach umsetzbare Möglichkeit, den Temperatursensor und/oder die Kapillare in stabiler Weise aufzunehmen, zu positionieren und zu halten. Zudem das Trägerteil außerdem einen erheblichen Teil des Temperatursensors und/oder der Kapillare bedecken, wodurch der schützende Einfluss vor aggressiven Umgebungen verstärkt wird.

In vorteilhafter Ausführung kann das Trägerteil an einem Ende eine ringförmige bzw. kreisförmige Aussparung aufweisen, die als Halterung für den Temperatursensor und/oder die Kapillare dienen kann und die bereits vorgestellte Durchführung darstellt. Zusätzlich kann der Temperatursensor mit einem Vorsprung oder einer Stufe an seinem Mantel auf Höhe der Sensorspitze für ein Fixieren am äußeren Ende des Trägerteils ausgestattet sein. Dies ermöglicht in Kombination mit einer Dichtung ein Abschließen des Messraums und die Möglichkeit, lediglich die Temperatursensorspitze dem Gas auszusetzen und andere Komponenten zu schützen.

Erfindungsgemäß ist der Temperatursensor innerhalb eines von der Kapillare des Gassensors umwickelten Volumens (also im axialen Hohlraum der Kapillare) angeordnet. Hierdurch wird eine besonders platzsparende Ausführung der Messvorrichtung realisiert.

In bevorzugter Ausführung der Erfindung umfasst die duale Messvorrichtung ferner einen Trägerkern, um welchen die Kapillare in Form einer Spirale gewickelt ist. Auf diese Weise wird die Wicklung der Kapillare stabilisiert. Beispielsweise ist der Trägerkern zylindrisch ausgebildet, wobei die Kapillare spiralförmig um den Zylinder gewickelt ist.

In vorteilhafter Ausführung ist der Temperatursensor innerhalb des Trägerkerns angeordnet oder durch den Trägerkern ganz oder teilweise ausgebildet. Dabei kann es sich bei dem Trägerkern um einen Außenmantel bzw. eine Außenfläche eines Korpus des Temperatursensors handeln. Der Außenmantel des Temperatursensors kann unterschiedlichen geometrischen Formen nachempfunden sein. Beispielsweise kann es sich bei dem Mantel um einen Zylinder handeln, um den zuvor erwähnten Trägerkern in zylindrischer Art und Weise zu realisieren, auf den die Kapillare spiralförmig gewickelt angeordnet ist. So lässt sich der Vorteil der Stabilisierung der Kapillare in idealer Weise mit dem bereits vorhanden Temperatursensor platzsparend auf kompakte Art und Weise und kosteneffizient kombinieren.

Vorzugsweise ist auf einer Innenseite oder Außenseite der Kapillarwand, jeweils dem Hohlraum zugewandt, eine reflektierende Oberfläche vorhanden, wodurch ein Austreten von elektromagnetischer Strahlung unterdrückt wird. Der Begriff "reflektierende Oberfläche" ist im Rahmen der Erfindung breit zu verstehen und umfasst sämtliche Konstellationen, die ein Austreten der elektromagnetischen Strahlung aus der Kapillare verhindern oder zumindest gering halten. Insbesondere wird im Rahmen der vorliegenden Erfindung unter einer reflektierenden Oberfläche eine Oberfläche verstanden, bei der mindestens 90 %, vorzugsweise mindesten 95 %, der orthogonal auf die Oberfläche treffenden Strahlung zurückgeworfen werden. Da der Reflexionsgrad abhängig von der Wellenlänge der elektromagnetischen Strahlung ist, bezieht sich dieses Verständnis auf die entsprechende hier eingesetzte elektromagnetische Strahlung. Die reflektierende Oberfläche kann einerseits eine für die jeweilige elektromagnetische Strahlung undurchlässige, spiegelnde Oberfläche umfassen, die insbesondere eine niedrige Rauheit aufweist (Rauheit < ½ λ). Beispielsweise kann die spiegelnde Oberfläche aus einer metallischen Schicht bestehen, wobei die Art des Metalls von dem Spektralbereich der verwendeten Strahlung abhängt. Eine solche spiegelnde Oberfläche kann auf der Innenseite der Kapillarwand angeordnet sein. Bei transparentem Kapillarmaterial besteht zudem die Möglichkeit, dass die Kapillare eine metallische Schicht umfasst, die auf der Außenseite der Kapillarwand angeordnet ist, wobei die reflektierende Oberfläche jeweils dem Hohlraum zugewandt ist.

Entsprechend einer weiteren bevorzugten Ausführung handelt es sich bei der reflektierenden Oberfläche um einen Materialschicht, die auf der Außenseite der Kapillare angeordnet ist und deren Brechungsindex kleiner als der des Materials der in diesem Fall transparenten Kapillarwand ist, sodass es an der Grenzfläche zwischen Kapillarwand und äußerer Materialschicht zu einer Totalreflexion kommt.

Die spiralförmige Kapillare kann durch einen gewickelten länglichen, rohrförmigen Hohlköper ausgebildet sein.

Eine Alternative der Ausführung der Kapillare wird durch ein Bauteil dargestellt, dessen im Wesentlichen kompakter (nicht hohler) Körper einen spiralförmig verlaufenden Kanal aufweist, der das Bauteil durchsetzt und somit den spiralförmigen Hohlraum ausbildet. Dieses Kernbauteil kann eine beliebige Grundfläche (bezüglich einer Achse der Spirale) aufweisen und beispielsweise kreisförmig sein und somit als dreidimensionalen Körper einen Zylinder darstellen oder bei einer rechteckigen Grundfläche entsprechend einen Quader bilden. Der in diesem Bauteil befindliche spiralförmige Kanal umfasst ebenfalls die optische Ein- und Auskopplungsstelle sowie den Ein- und Auslass für das zu prüfende Gasgemisch. Je nach Einsatzgebiet besteht optional die Möglichkeit einer Behandlung der Oberfläche (=Kapillarwand) des spiralförmigen Hohlraums durch Verfahren wie Passivierung, Verglasung, Emaillierung oder andere Maßnahmen zur Erzeugung einer gewissen chemischen Beständigkeit oder Hitzebeständigkeit. Vorzugsweise ist innerhalb des von dem Kanal umwundenen Volumens ein insbesondere zylindrischer Hohlraum in dem Bauteil vorhanden, der die Aufnahme des Temperatursensors erlaubt. Der Hohlraum kann insbesondere als ein zylinderförmiges Durchgangsloch ausgebildet sein, so dass das Bauteil selbst eine Hohlzylinderform aufweist, in dessen Zylinderwand der Kanal spiralförmig den Hohlraum umläuft.

Für die Kapillare, genauer gesagt für die Kapillarwand, in Betracht kommende Materialien stellen unter anderem Metalle oder Metalllegierungen dar, insbesondere rostfreier Stahl; Gläser, insbesondere Quarzglas; Kunststoffe oder Keramiken.

Auf der Innenseite der Kapillarwand kann eine Beschichtung aus einem optisch transparenten Material (bezüglich der verwendeten Strahlung) aufgebracht werden. Bei dem Schichtmaterial kann es sich unter anderem um eine Schicht aus einem Glas, Siliziumdioxid (SiOz) oder Aluminiumoxid (Al₂O₃) handeln. Diese innere Beschichtung dient als Schutz vor Oberflächenveränderungen des metallischen Hohlraums. Zusätzlich besteht die Möglichkeit, dass die Innenfläche der Kapillarwand durch Anwendung eines Polierverfahrens einen spiegelgleichen Glanzgrad aufweist. Dies verbessert wiederum die Reflexion der eintretenden Strahlung innerhalb der Kapillare.

Grundsätzlich ist die Länge der Kapillare im Rahmen der Erfindung nicht auf bestimmte Maße beschränkt. Je Länger die Kapillare, desto länger ist der Weg der Strahlung durch das Messgas, sodass die Genauigkeit der Messung zunimmt. In bevorzugten Ausführungen liegt die Länge der (gestreckten, nicht gewickelten) Kapillare beispielsweise im Bereich von 5 cm bis 100 cm, bevorzugt 10 cm bis 80 cm. Der Außendurchmesser der Kapillarwand liegt bevorzugt im Bereich von Mikro- bis Millimetern, insbesondere 400 µm bis 1100 µm, bevorzugt 500 µm bis 1000 µm. Der lichte Innendurchmesser der Kapillare, also der Durchmesser des Hohlraums, liegt ebenfalls typischerweise im Bereich von Mikro- bis Millimetern, beispielsweise 100 µm bis 1000 µm, bevorzugt 400 µm bis 900 µm.

Gemäß einer bevorzugten Ausgestaltung der Erfindung, nachfolgend auch als Reflexionsmodus bezeichnet, sind die optische Einkopplungsstelle und Auskopplungsstelle gemeinsam an einem der beiden Enden der Kapillare ausgebildet. Dabei ist an dem gegenüberliegenden Ende der Kapillare ein Spiegel angeordnet, der die auftreffende elektromagnetische Strahlung in Richtung der Einkopplungsstelle zurück reflektiert. Mit anderen Worten durchsetzt die eingekoppelte Strahlung die Kapillare von der Einkopplungsstelle bis zum Spiegel und strömt von dort in entgegengesetzter Richtung zurück zur Einkopplungsstelle, wo sie aus der Kapillare ausgekoppelt wird. Vorteil dieser Ausführung ist, dass die Weglänge der Strahlung im Messgas verdoppelt wird und damit die Sensorempfindlichkeit noch weiter erhöht wird. Bevorzugt sind hier die Einkopplungsstelle und die Auskopplungsstelle als ein einziges Bauteil ausgebildet.

Gemäß einer weiteren bevorzugten Ausgestaltung der Erfindung, nachfolgend auch als Transmissionsmodus bezeichnet, sind die optische Einkopplungsstelle und Auskopplungsstelle nicht gemeinsam an einem der beiden Enden der Kapillare ausgebildet. Sie befinden sich hingegen separat an den beiden gegenüberliegenden Ende der Kapillare. Somit ist an dem gegenüberliegenden Ende der optischen Einkopplungsstelle der Kapillare kein reflektierender Spiegel angeordnet, sondern die optische Auskopplungsstelle. Mit anderen Worten durchsetzt die eingekoppelte Strahlung die Kapillare von der Einkopplungsstelle bis zur Auskopplungsstelle, wo sie aus der Kapillare ausgekoppelt wird. Vorteil dieser Ausführung ist, dass konstruktive Umsetzung, insbesondere bezügliche der separaten Kopplungsstellen für die Strahlung mit weniger Aufwand verbunden ist.

Die duale Messvorrichtung umfasst ferner bevorzugt eine Lichtquelle zur Emission der elektromagnetischen Strahlung, wobei die Strahlung über einen Lichtleiter mit der optischen Einkopplungsstelle verbunden ist. Die Lichtquelle kann eine polychromatische oder monochromatische Lichtquelle sein. Vorzugsweise ist sie als polychromatische Lichtquelle ausgebildet, das heißt, sie emittiert Licht über einen gewissen Wellenlängenbereich, wodurch die Detektion mehrerer Gaskomponenten ermöglicht wird. Der emittierte Spektralbereich, das heißt die Energie der emittierten Strahlung, ist im Rahmen der Erfindung grundsätzlich nicht beschränkt. Er kann insbesondere ultraviolette Strahlung, visuelle Strahlung und/oder Nah- und Fern-Infrarotstrahlung umfassen. Das optische Gasmessverfahren wird ermöglicht durch die Eigenschaft von Molekülen, elektromagnetische Strahlung einer oder mehrerer genau definierten Wellenlängen λ, zu absorbieren oder auch zu emittieren. Die spektrale Lage dieser Absorption bzw. Emission charakterisiert dabei die jeweilige Gasart und ist im Vergleich zu anderen gasanalytischen Messverfahren extrem selektiv. Aufgrund dessen sind im Rahmen der Erfindung besonders bevorzugt der ultraviolette und visuelle Bereich, da in diesem Spektralbereich die Absorption im Gasmolekül durch Elektronenübergänge der Valenzelektronen verursacht wird, die mit vergleichsweise starken Intensitätsänderungen im Absorptionsspektrum einhergehen. Für die Messung von Absorptionsspektren im UV-Vis-Bereich stehen kostengünstige und robuste Detektoren zur Verfügung.

Im Falle der Verwendung monochromatischer Lichtquellen sind entsprechende Strahlungsquellen zu wählen, deren Emissionswellenlänge im Wellenbereich der zu detektierenden Gase liegt. Geeignete monochromatische Lichtquellen sind etwa Laser oder LEDs.

Gemäß vorteilhafter Ausführungen der erfindungsgemäßen dualen Messvorrichtung werden die in die Kapillare eingestrahlte elektromagnetische Strahlung und die von dort austretende (abgeschwächte) elektromagnetische Strahlung zumindest abschnittsweise über einen gemeinsamen Lichtleiter geleitet, insbesondere gegenläufig. Hierdurch wird nicht nur Material des Lichtleiters, beispielsweise Glasfaserleiter, eingespart, sondern die Kompaktheit des Sensors erhöht. Diese Ausführung eignet sich besonders vorteilhaft in Kombination mit der gemeinsamen Anordnung von Ein- und Auskopplungsstelle an einem Ende der Kapillare (Reflexionsmodus).

Der Gassensor umfasst bevorzugt ferner zumindest eine für die elektromagnetische Strahlung empfindliche Detektionseinheit zur Umwandlung der elektromagnetischen Strahlung in ein elektrisches Signal, wobei die Detektionseinheit über einen Lichtleiter mit der optischen Auskopplungsstelle verbunden ist. Eine solche Detektionseinheit erlaubt in besonders einfacher Weise die Erfassung der eintreffenden abgeschwächten Strahlung. Beispielsweise kann als Detektionseinheit eine Fotodiode eingesetzt werden, die einen Stromfluss proportional zur einfallenden Lichtintensität erzeugt.

Vorzugsweise ist zwischen der Detektionseinheit und der optischen Auskopplungsstelle ein optischer Filter angeordnet, der ausgebildet ist, einen vorbestimmten spektralen Bereich selektiv passieren zu lassen und die übrigen Spektralbereiche auszublenden. Ein solcher Filter wird auch als Bandpassfilter bezeichnet. Der optische Filter erlaubt, dass nur ein solcher Spektralbereich durchgelassen wird, in dem eine charakteristische Absorptionsbande des zu detektierenden Gases vorliegt. Dies ermöglicht den Einsatz unspezifischer Detektionseinheiten, da diese aufgrund des vorgeschalteten optischen Filters ausschließlich mit charakteristischer Strahlung beaufschlagt werden. Sobald eine solche Detektionseinheit eine Intensitätsänderung einfallender Strahlung registriert, muss dieses Ereignis somit durch die Gegenwart einer Gaskomponente verursacht sein, die in diesem Spektralbereich absorbiert. Durch die Kombination mit einem Bandpassfilter ist die nachgeschaltete Detektionseinheit somit, ausgelegt, selektiv eine bestimmte Gaskomponente zu detektieren.

Gemäß einer besonders vorteilhaften Ausführung der Erfindung umfasst der optische Gassensor eine Mehrzahl von Detektionseinheiten mit jeweils einem vorgeschalten optischen Filter, wobei letztere ausgebildet sind, unterschiedliche vorbestimmte spektrale Bereiche selektiv passieren zu lassen. Auf diese Weise lassen sich unterschiedliche Gaskomponenten in einem Gasgemisch nebeneinander nachweisen.

In bevorzugter Ausführung umfasst die erfindungsgemäße duale Messvorrichtung eine Gaskonditionierungseinheit. Die Gaskonditionierungseinheit ermöglicht eine Vorreinigung des dem Sensor zur Detektion eines Gases zugeführten Gases. Beispielsweise können Bestandteile, die nicht Gegenstand (Target) der Detektion sind, aus dem Messgas entfernt oder vermindert werden. Insbesondere betrifft dies partikuläre oder gasförmige Bestandteile, die eine Störung der Messgenauigkeit verursachen könnten oder deren Korrosivität zu einer Beeinträchtigung des Sensors führen könnten. Diese Ausgestaltung ermöglicht den Einsatz der dualen Messvorrichtung in aggressiven Umgebungen, beispielsweise in Abgaskanälen von Fahrzeugen, etwa von verbrennungsmotorisch betrieben Fahrzeugen.

Die Gaskonditionierungseinheit kann unterschiedliche Ausführungen aufweisen. Beispielsweise kann sie einen vom Gas durchströmbaren Filter zur Zurückhaltung partikulärer Bestandteile umfassen. Alternativ oder zusätzlich kann sie bestimmte Komponenten im Wege einer chemischen Reaktion, beispielsweise einer katalysierten Reaktion oder einer Verbrennung aus dem Messgas entfernen oder in eine zu messende Zielverbindung umsetzen.

Abhängig vom Einsatzgebiet kann die duale Messvorrichtung weitere Komponenten umfassen. Beispielsweise kann sie Fördermittel zur Beförderung des Gases in die und aus der Messvorrichtung, Ventile und andere Elemente umfassen.

Ein weiterer Aspekt der vorliegenden Erfindung betrifft die Verwendung der erfindungsgemäßen dualen Messvorrichtung in einem Fortbewegungsmittel, insbesondere in einem Abgastrakt und/oder einem Innenraum des Fortbewegungsmittels und/oder innerhalb eines Brennstoffzellensystems.

Das Fortbewegungsmittel kann straßengebundene Fahrzeuge, Wasserfahrzeuge (Schiffe) oder Flugzeuge jeweils zum Transport von Personen oder Gütern umfassen, beispielsweise Personen- oder Lastkraftfahrzeige. Ferner kann das Fortbewegungsmittel unterschiedliche Antriebsquellen, insbesondere mit Diesel, Benzin oder Gas betriebenen Verbrennungsmotoren, Elektromotoren, welche ihre elektrische Energie durch eine Batterie und/oder eine Brennstoffzelle beziehen, oder beliebige hybride Kombinationen von diesen umfassen.

Sofern die erfindungsgemäße Messvorrichtung innerhalb eines Abgastrakts verwendet wird, dient sie insbesondere der Detektion von Abgaskomponenten des Verbrennungsmotors, beispielsweise von Sauerstoff, Kohlenwasserstoffen, Stickoxiden, Kohlenmonoxid, Ammoniak; oder von Abgaskomponenten der Brennstoffzelle, insbesondere Wasserstoff; sowie der Temperatur des Abgases. Es können auch mehrere erfindungsgemäße Messvorrichtungen an unterschiedlichen Positionen des Abgastrakts verbaut werden.

Bei Verwendung in einem Innenraum Fortbewegungsmittels kommt insbesondere ein Fahrgastinnenraum oder ein Frachtraum in Frage. Bei dieser Anwendung kann die Messvorrichtung insbesondere der Überwachung der Luftqualität zum gesundheitlichen Schutz oder dem Komfort der Fahrzeuginsassen dienen. Zudem kann im Frachtraum ein unerwünschtes Austreten von Gasen des Frachtguts überwacht werden. Es können auch hier mehrere erfindungsgemäße Messvorrichtungen an unterschiedlichen Positionen des Innenraums verbaut werden.

Sofern die Messvorrichtung in einem Brennstoffzellensystem oder in einer Peripherie eines solchen eingesetzt wird, ist sie insbesondere zur Detektion von Wasserstoff ausgebildet und kann einerseits der Steuerung der Brennstoffzelle dienen und andererseits der Detektion von Leckagen oder Undichtigkeiten des Systems.

Die Erfindung betrifft weiterhin ein Fortbewegungsmittel, das mindestens eine erfindungsgemäße duale Messvorrichtung umfasst, insbesondere in einem Abgastrakt und/oder einem Innenraum und/oder innerhalb eines Brennstoffzellensystems des Fortbewegungsmittels.

In einer Ausgestaltung umfasst das Fortbewegungsmittel einen Verbrennungsmotor, eine daran angeschlossene Abgasanlage mit einem Abgaskanal und mindestens einer darin angeordneten Abgasreinigungskomponente, wobei in dem Abgaskanal mindestens eine erfindungsgemäße duale Messvorrichtung zur Bestimmung der Beschaffenheit eines Gases in Kontakt mit dem Abgas des Verbrennungsmotors angeordnet ist. Vorzugsweise ist zumindest die Messzelle der Messvorrichtung in Kontakt mit dem Abgas angeordnet, während die übrigen Komponenten der Messvorrichtung, wie die optoelektronische Einheit oder elektronische Steuer- und Auswerteeinheit, außerhalb des Abgaskanals angeordnet sind.

In einer weiteren Ausgestaltung umfasst das Fortbewegungsmittel ein Brennstoffzellensystem, wobei die mindestens eine duale Messvorrichtung innerhalb des Brennstoffzellensystems oder einer Peripherie desselben angeordnet ist. Beispielsweise kann die Messvorrichtung in einem Abgaskanal der Brennstoffzelle, in einem Wasserstoffspeicher oder einem diesen umgebenden Bereich, in einer wasserstoffführenden Komponente oder einem diese umgebenden Bereich und/oder innerhalb eines Innenraums des Fortbewegungsmittels angeordnet sein. Auf diese Weise können in diesen Bereichen beispielsweise Leckagen des Brennstoffs, insbesondere Wasserstoff, aus dem System jederzeit überwacht und kontrolliert werden oder die Messvorrichtung kann der Steuerung des Betriebs der Brennstoffzelle dienen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen schematischen Aufbau einer dualen Messvorrichtung gemäß einer Ausgestaltung der Erfindung (Transmissionsmodus)
- Figur 2a: eine schematische Querschnittsansicht der Kapillare der dualen Messvorrichtung in einer ersten Ausführung;
- Figur 2b: eine schematische Querschnittsansicht der Kapillare der dualen Messvorrichtung in einer zweiten Ausführung;
- Figur 2c: eine schematische Querschnittsansicht der Kapillare der dualen Messvorrichtung in einer dritten Ausführung;
- Figur 3: eine schematische Ansicht der Kapillare der dualen Messvorrichtung in einer vierten Ausführung;
- Figur 4: einen schematischen Aufbau des Sensors zur Detektion eines Gases gemäß einer Ausgestaltung der Erfindung (Reflexionsmodus);
- Figur 5: Absorptionsspektren von NO (a, b), NO₂ (c) sowie NH₃ (d);
- Figur 6: einen schematischen Aufbau einer dualen Messvorrichtung inklusive Gaskonditionierungseinheit gemäß einer Ausgestaltung der Erfindung, und
- Figur 7: eine schematische Darstellung eines Fahrzeugs mit dualen Messvorrichtungen gemäß der Erfindung.

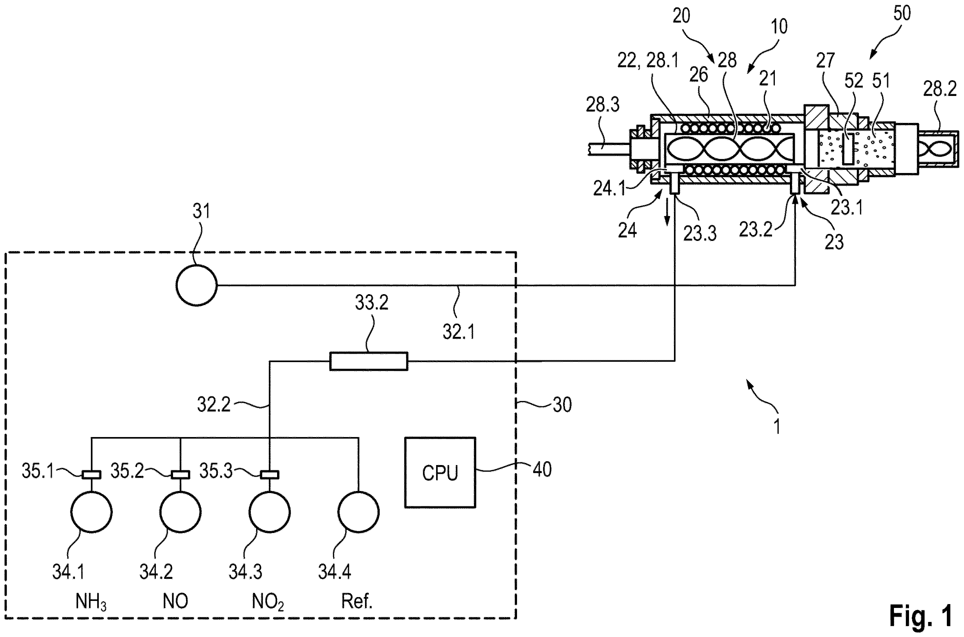

Figur 1 zeigt eine Prinzipdarstellung einer dualen Messvorrichtung gemäß einer Ausführung der vorliegenden Erfindung. Die insgesamt mit 1 bezeichnete duale Messvorrichtung umfasst als grundsätzliche Baugruppen eine Messzelle 20 mit einem Gassensor 10, der eine spiralförmige Kapillare 21 umfasst, und einem integrierten Temperatursensor 28, sowie eine optoelektronische Einheit 30, wobei eine Steuer- und Auswerteeinheit 40 eigenständig oder wie hier in der optoelektronischen Einheit 30 integriert sein kann.

Die duale Messvorrichtung 1 besitzt des Weiteren ein insbesondere rotationssymmetrisches zylinderförmiges Gehäuse 26. Gemäß der beschriebenen Ausführung besteht das Gehäuse 26 aus Metall und bietet die Möglichkeit, durch Löten oder andere Verfahren, weitere Bestandteil zu aufzunehmen. An diese Element ist nachfolgend und koaxial in bündiger Art und Weise ein Trägerteil 27 angeordnet. Auch dieses weist einen Mantel mit einer Außen- und Innenfläche auf, ist rotationssymmetrisch und umschließt einen Hohlraum. Beide Komponenten definieren somit einen Raum, der als Messraum aufzufassen ist. In dem besagten Messraum befinden sich die Kapillare 21 des Gassensors 10 sowie der Temperatursensor 28, deren Aufgabe die Messung von Zusammensetzung und Temperatur eines Gases bzw. Gasgemischs darstellt. Der Temperatursensor 28 liegt mittig entlang der Rotationsachsen in dem Messraum. Der Temperatursensor 28 wird durch sein Gehäuse bzw. Mantel 28.1 umgeben. Er besitzt eine Sensorspitze 28.2, die in Kontakt mit dem zu vermessenden Gas steht. Gehalten und positioniert wird der Temperatursensor 28 durch das Trägerteil, das eine kreisförmige Öffnung in Form einer Durchführung an seinem distalen Ende aufweist. Die Sensorspitze 28.2 ragt teilweise aus dem Trägerteil heraus, sodass ein Kontakt zu dem Gas bestehen kann. Weiterhin umfasst der Temperatursensor für die Signalübergabe und anschließende -verarbeitung eine Sensorleitung 28.3.

Des Weiteren umfasst die Messvorrichtung 1 gemäß dieser Ausführung eine Gaskonditionierungseinheit 50 zur Vorreinigung des dem Gassensor 10, insbesondere seiner Kapillare 21 zuzuführenden Gases. Die Gaskonditionierungseinheit 50 umfasst ein Reinigungselement 51, die beispielsweise ein Filter ist, sowie ein Heizelement 52 und wird später erläutert. An dieser Stelle sei jedoch erwähnt, dass die Gaskonditionierungseinheit idealerweise ebenfalls innerhalb des durch das Trägerteil gebildeten Hohlraums angeordnet wird, sie kann jedoch auch außerhalb angeordnet sein.

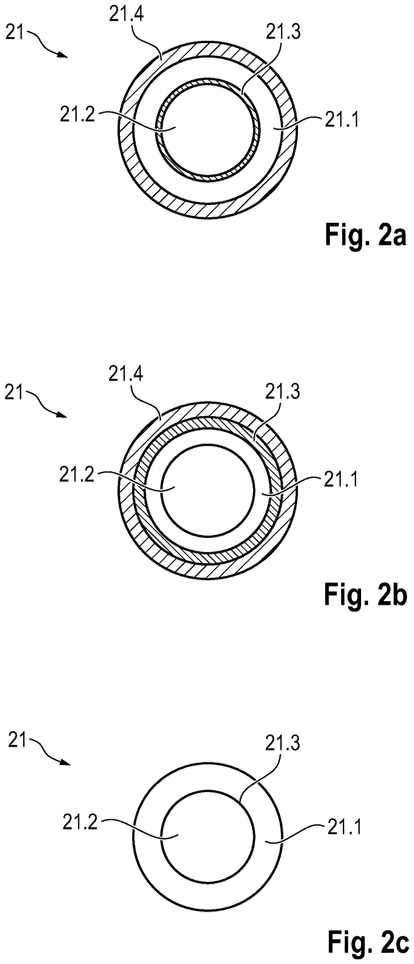

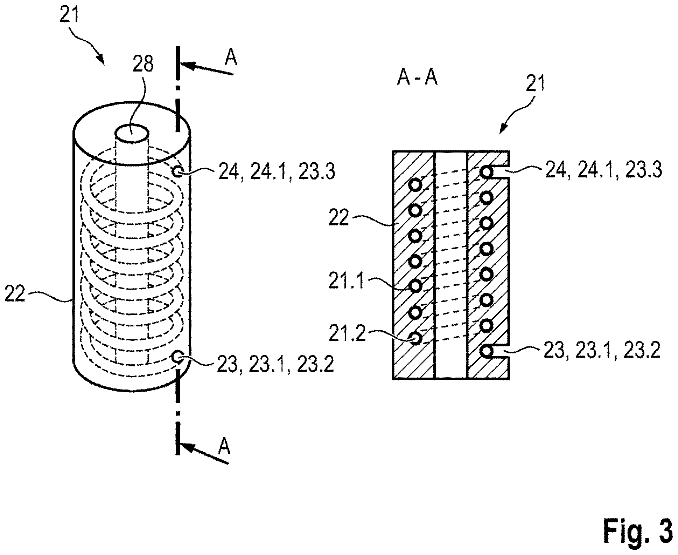

Kernstück des Gassensors 10 ist eine Kapillare 21, die spiralförmig um einen beispielsweise zylindrischen Trägerkern 22 gewickelt ist. In Figur 1 ist die Messzelle 20 in einer Schnittdarstellung längs der Wicklung der Kapillare 21 gezeigt. Die Figuren 2a bis 2c zeigen verschiedene Ausführungsformen spiralförmig gewickelter, rohrförmiger Kapillaren 21 in Querschnittsansicht. Figur 3 zeigt eine alternative Ausführung der Kapillare in Form eines massiven Bauteils. Die Kapillaren 21 weisen jeweils eine Kapillarwand 21.1 auf, welche einen Hohlraum 21.2 umschließt. Entscheidend ist die Eignung der Kapillare, ein Austreten der elektromagnetischen Strahlung zu unterdrücken und einen möglichst hohen Strahlungsanteil innerhalb der Kapillare zu halten, sodass er mit dem darin vorhandenen Messgas in Wechselwirkung treten kann.

Innerhalb der dargestellten Ausführungsform besitzt der Temperatursensor 28 einen zylindrischen Mantel 28.1, der die Eigenschaften und Funktion des Trägerkerns 22 erfüllt und daher als ein solcher Anwendung findet. So erreicht man eine kompakte platzsparende Anordnung beider Sensoren und erhöht die Stabilität der spiralförmig gewickelten Kapillare 21.

Die Kapillare 21 des Gassensors weist ein erstes und ein zweites Ende auf. Wie in Figur 1 dargestellt, ist an dem ersten Ende (unten rechts in der Darstellung) ein erstes Anschlusselement 23 angeordnet, das im vorliegenden Beispiel als ein T-Stück ausgebildet ist. Das Anschlusselement 23 weist einerseits einen Gaseinlass 23.1 zur Zuführung des zu vermessenden Gases oder Gasgemischs auf. Ferner weist das Anschlusselement 23 eine optische Einkopplungsstelle 23.2 auf, über die eine elektromagnetische Strahlung in den Hohlraum 21.2 der Kapillare 21 eingekoppelt werden kann. An dem zweiten Ende der Kapillare 21 (links oben in der Darstellung) ist ein zweites Anschlusselement 24 angeordnet, das hier ebenfalls die Gestalt eines T-Stücks aufweist. Das zweite Anschlusselement 24 weist einerseits einen Gasauslass 24.1 auf, aus dem das zu vermessende Gas aus dem Hohlraum der Kapillare 21 ausgeleitet werden kann. Weiter besitzt das zweite Anschlusselement 24 eine optische Auskopplungsstelle 23.3, über die eine elektromagnetische Strahlung aus dem Hohlraum 21.2 der Kapillare 21 ausgekoppelt werden kann.

Die optoelektronische Einheit 30 weist eine Lichtquelle 31 auf, die als eine polychromatische Lichtquelle ausgebildet ist, beispielsweise eine (spezielle) LED, Glüh- oder Halogenlampe. Im vorliegenden Beispiel emittiert die Lichtquelle 31 Licht im Bereich der ultravioletten bis visuellen Strahlung. Die Strahlung der Lichtquelle 31 wird über einen ersten Lichtleiter 32.1, insbesondere eine Glasfaser, zu der optischen Einkopplungsstelle 23.2 der Messzelle 20 geleitet.

Ferner weist die optoelektronische Einheit 30 eine Anzahl von hier vier Detektionseinheiten 34 auf, die vorzugsweise als Fotodioden ausgebildet sind. Die Detektionseinheiten 34 sind über einen zweiten Lichtleiter 32.2 mit der optischen Auskopplungsstelle 23.3 verbunden. Ferner ist in dem zweiten Lichtleiter 32.2 ein Koppler nämlich ein 1x4-Koppler 33.2 angeordnet, der eine Aufspaltung des zweiten Lichtleiters 32.2 in vier parallele Leitungsabschnitte vornimmt, welche zu den entsprechenden Detektionseinheiten 34.1, 34.2, 34.3 und 34.4 führen.

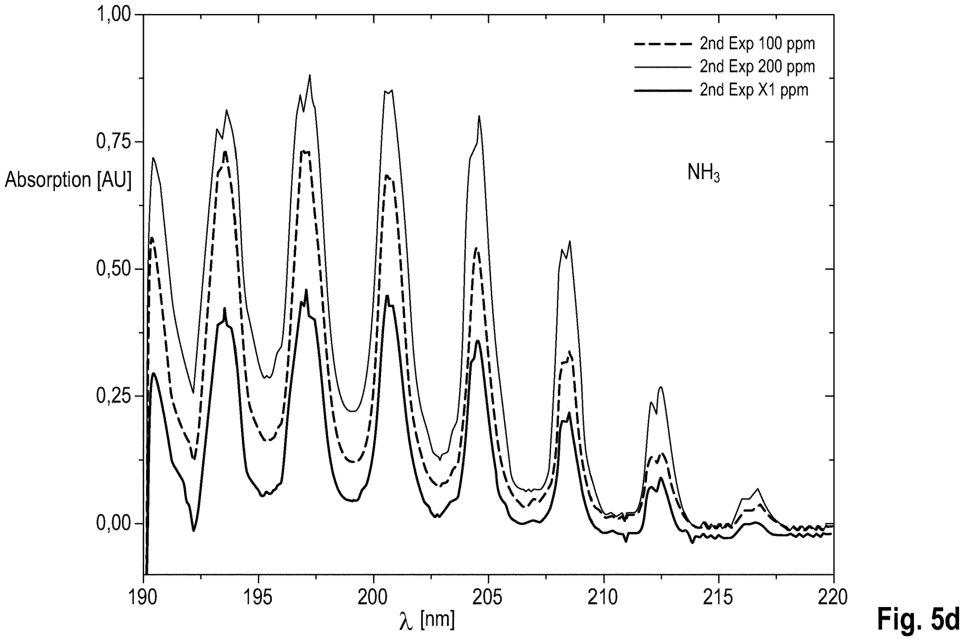

Der ersten Detektionseinheit 34.1 ist dabei ferner ein erster optischer Filter 35.1 vorgeschaltet, der zwischen der ersten Detektionseinheit 34.1 und der optischen Auskopplungsstelle 23.3 angeordnet ist. Im vorliegenden Beispiel handelt es sich bei dem ersten optischen Filter 35.1 um einen Bandpassfilter, beispielsweise einen Bandpass-Interferenzfilter, der Strahlung in einem Spektralbereich von 185 bis 192 nm oder von 192 bis 195 nm oder von 195 bis 198 nm oder von 198 bis 202 nm oder von 202 bis 207 nm oder von 207 bis 210 nm oder von 210 bis 215 nm durchlässt und die übrige Strahlung ausblendet. Insbesondere weist der erste optische Filter 35.1 eine Durchlassbereich von 190 bis 200 nm oder von 214 bis 216 nm oder von 225 bis 230 nm auf. Hierzu ist in Figur 5(d) das Absorptionsspektrum von Ammoniak NH₃ dargestellt. Es ist ersichtlich, dass NH₃ in diesen Bereichen ausgeprägte Absorptionsbanden aufweist. Durch die Wahl des ersten optischen Filters 35.1 mit einem solchen geeigneten Durchlassbereich wird somit die erste Detektionseinheit 34.1 ausgebildet, spezifisch Stickstoffmonoxid NH₃ zu detektieren.

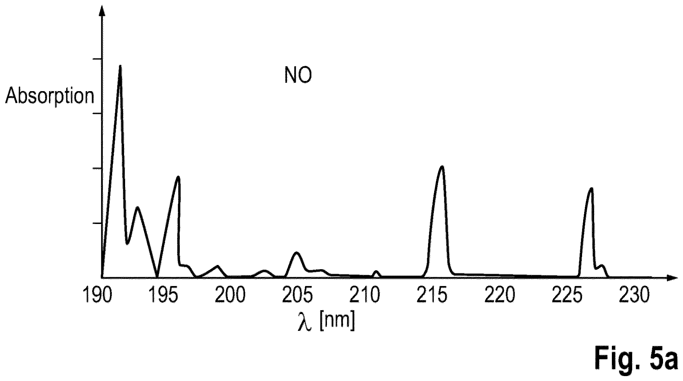

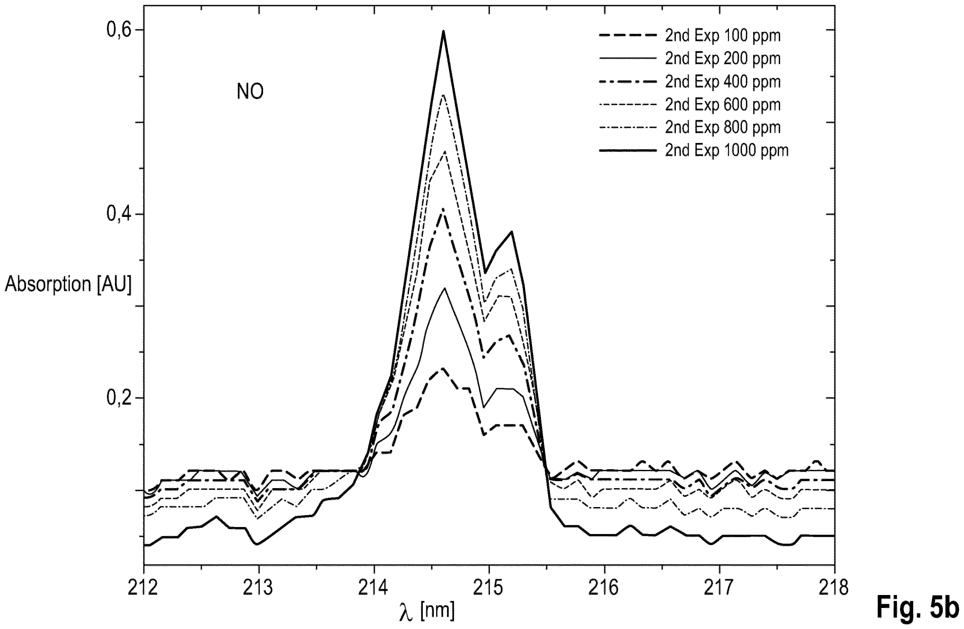

Im dargestellten Beispiel ist ferner der zweiten Detektionseinheit 34.2 ein zweiter optischer Filter 35.2 zugeordnet. Der zweite Filter 35.2 ist ebenfalls als Interferenzfilter ausgebildet und lässt im dargestellten Beispiel einen Spektralbereich von beispielsweise 188 bis 192 nm oder von 192 bis 197 nm oder von 202 bis 206 nm oder von 212 bis 216 nm oder von 223 bis 229 nm durch, wo Stickstoffoxid NO starke Absorptionsbanden aufweist (vergleiche Figur 5(a) und 5(b)). Auf diese Weise spricht die zweite Detektionseinheit 34.2 spezifisch auf NO an.

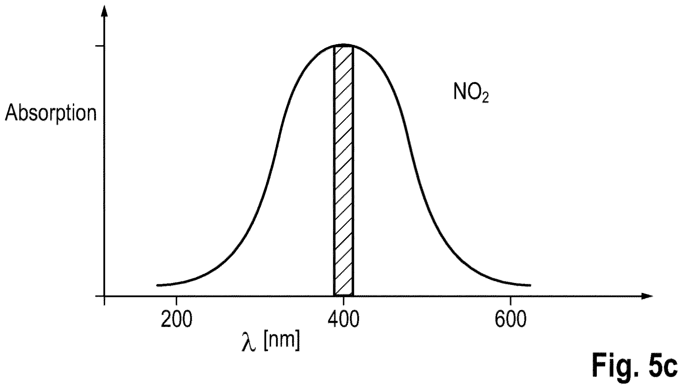

Im dargestellten Beispiel ist ferner der dritten Detektionseinheit 34.3 ein dritter optischer Filter 35.3 zugeordnet. Der dritte Filter 35.3 ist ebenfalls als Interferenzfilter ausgebildet und lässt im dargestellten Beispiel einen Spektralbereich von beispielsweise 390 bis 410 nm durch, wo Stickstoffdioxid NO₂ eine starke Absorptionsbande aufweist (vergleiche Figur 5(c)). Auf diese Weise spricht die dritte Detektionseinheit 34.3 spezifisch auf NO₂ an.

Ferner ist eine vierte Detektionseinheit 34.4 vorhanden, der jedoch kein optischer Filter vorgeschaltet ist. Die vierte Detektionseinheit 34.4 fungiert somit als Referenz, um Schwankungen der Strahlungsintensität der von der Lichtquelle 31 emittierten Strahlung zu kompensieren.

Schließlich weist die duale Messvorrichtung 1 eine elektronische Steuer- und Auswerteeinheit 40 auf, welche der Steuerung der Lichtquelle 31 sowie der Auswertung der elektrischen Signale der Detektionseinheiten 34 dient. Insbesondere ist die Steuer- und Auswerteeinheit 40 ausgebildet, um die Konzentration der Gaskomponenten NH₃, NO und NO₂ in Abhängigkeit von den elektrischen Signalen der Detektionseinheiten 34.1, 34.2 und 34.3 zu ermitteln.

Nachfolgend werden anhand der Figuren 2a bis 2c und 3 Ausführungen der Kapillare 21 des Gassensors 10 beschreiben, die in dem Sensor gemäß Figur 1 eingesetzt werden können. Sämtliche der Kapillaren 21 der Figuren 2a bis 2c sind als längliche rohrförmige Hohlkörper ausgebildet, die spiralförmig gewickelt sind.

Die in Figur 2a gezeigte Mikrokapillare 21 weist eine Kapillarwand 21.1 auf, welche einen Hohlraum 21.2 umschließt. Die Kapillarwand 21.1 kann prinzipiell aus beliebigen, vorzugsweise dielektrischen Materialien umfassend Metalle, Gläser, insbesondere Quarzglas, Kunststoffe, Keramiken etc. bestehen. In bevorzugten Ausführungen ist die Kapillarwand aus einem faseroptischen Material, insbesondere Glasfasern, ausgebildet. Auf der Innenseite der Kapillarwand 21.1 ist gemäß dem dargestellten Beispiel eine reflektierende Oberfläche 21.3 dem Hohlraum 21.2 zugewandt ausgebildet. Die reflektierende Oberfläche 21.3 kann in Form einer auf die Innenseite der Kapillarwand 21.3 aufgebrachten reflektierenden Beschichtung ausgebildet sein und vorzugsweise eine Rauheit aufweisen, die kleiner als die halbe Wellenlänge der verwendeten elektromagnetischen Strahlung ist. Beispielsweise kann eine solche reflektierende Oberfläche durch Aufdampfen eines metallischen Films hergestellt werden. Optional kann die Kapillare 21 eine außen befindliche Kunststoffschicht 21.4 besitzen. Hierbei handelt es sich um eine Schicht, die aus einem Kunststoff, insbesondere einem Polyimide gebildet wird. Ihr Zweck liegt darin, die Oberflächen der Kapillare vor Feuchtigkeit, Abrieb und anderen mechanische Beanspruchungen zu schützen. Sie besitzt weiterhin eine hohe Hitzebeständigkeit sowie chemische Beständigkeit. Beides kann insbesondere bei Einsatz des Sensors für Abgasmessungen sinnvoll sein. Die Dicke der Kunststoffschicht liegt bevorzugt im Bereich von Mikrometern, beispielsweise 20 µm bis 50 µm. Die in Figur 2a gezeigte Kapillare wird auch als "Hollow Glass Waveguide" bezeichnet. Alternativ kann die Kapillarwand 21.1 selbst aus einem Material bestehen, das die verwendete elektromagnetische Strahlung reflektiert (s. Figur 2c). In alternativer, in Figur 2b dargestellter Ausführung, ist die reflektierende Oberfläche auf der Außenseite des Kapillarwand 21.1 angeordnet, wobei auch hier die reflektierende Oberfläche dem Hohlraum 21.2. zugewandt ist. In noch weiteren Ausführungen ist die Kapillare 21 in Form einer "Light Guiding Capillare" ausgebildet. In diesem Fall ist sie aus einem für die verwendete Strahlung transparenten Material, beispielsweise Quarzglas, gebildet und auf der Außenfläche ein Mantel beziehungsweise eine Beschichtung aus einem Material mit einem kleineren Brechungsindex als das Kapillarmaterial angeordnet, beispielsweise Tetrafluoroethylen. In noch weiteren Ausführungen hat die Kapillare 21 die Form einer sogenannten "Hollow Core Photonic Bandgap Fiber".

Die Länge der (gestreckten, nicht gewickelten) Kapillare 21 kann im Bereich von 5 cm bis 100 cm, bevorzugt 10 cm bis 80 cm liegen. Im Falle der Ausführung des Sensors im beschriebenen Reflexionsmodus verdoppelt sich der zurückgelegte Weg der Strahlung und somit der Messstrecke, da optische Ein- und Auskopplungsstelle sich am selben Ende befinden. Der Außendurchmesser liegt bevorzugt im Bereich von Mikro- bis Millimetern, beispielsweise 400 µm bis 1100 µm. Der lichte Innendurchmesser, also der Durchmesser des Hohlraums, liegt ebenfalls typischerweise im Bereich von Mikro- bis Millimetern, beispielsweise 100 µm bis 1000 µm, insbesondere von 200 µm bis 900 µm.

In Figur 2b wird eine alternative Ausführungsform der Kapillare gezeigt. Ihre Abmessungen (Länge, Außendurchmesser, lichter Durchmesser) entsprechen der in Figur 2a dargestellten Kapillare. Gemäß der hier gezeigte Ausführungsform befindet sich die reflektiere Oberflächenschicht 21.3 an der Außenseite der Kapillarwand. Dementsprechend ist die Kapillarwand 21.1 aus einem optisch durchlässigen Material, insbesondere Gläsern, gebildet. Ebenso wie in Figur 2a kann die Kapillare nach Figur 2b eine äußere Kunststoffbeschichtung 21.4 besitzen.

Eine weitere Ausführung der Kapillare zeigt Figur 2c. In diesem Beispiel besteht die Kapillarwand 21.1 selbst aus einem Material, das die verwendete elektromagnetische Strahlung reflektiert. Ein hierfür in Betracht kommendes Material ist unter anderem ein Metall, beispielsweise rostfreier Stahl (316L, 174 PH und weitere). Weiterhin besteht die Möglichkeit einer für die verwendete Strahlung durchlässigen Beschichtung 21.3 an der Innenfläche der metallischen Kapillarwand 21.1. Diese Beschichtung 21.3 kann beispielsweise aus Glas, Siliziumdioxid (SiOz) oder Aluminiumoxid (Al₂O₃) bestehen. Die Beschichtung 21.3 dient als Schutz vor Oberflächenveränderungen der metallischen Kapillarwand 21.1 und weist eine Dicke im Bereich von 80 nm bis 200 nm auf. Die weiteren Abmessungen (Länge, Außendurchmesser, lichter Durchmesser) entsprechen der in Figur 2a dargestellten Kapillare.

Figur 3 zeigt eine alternative Ausführungsform einer Kapillare 21 für einen Gassensor der dualen Messeinrichtung. Die Kapillare 21 wird in diesem Fall durch ein kompaktes Bauteil 22, hier in zylindrischer Form, gebildet und besitzt einen Hohlraum 21.2 in Form eines Kanals, der spiralförmig das Bauteil 22 durchsetzt. Die Kapillarwand 21.1 wird in diesem Beispiel durch die Wandung des spiralförmigen Kanals gebildet. Das Bauteil 22 weist Öffnungen 23 und 24 auf, die als Gaseinlass 23.1 und Gasauslass 24.1 sowie als Ein- bzw. Auskopplungsstelle 23.2, 23.3 für die Strahlung entsprechend Figur 1 dienen. Das in Figur 3 gezeigte Bauteil 22 weist einen zusätzlichen Hohlraum auf, der in dem von dem Kanal umwundenen Volumen ausgebildet ist. Der besagte Hohlraum durchsetzt das zylindrische Bauteil 22 über dessen gesamte Höhe zwischen seinen beiden kreisförmigen Grundflächen. Dadurch weist das Bauteil 22 einen zylindrischen Hohlraum auf, der dem optionalen Wicklungsraum entspricht. In diesem zylindrischen Hohlraum ist der Temperatursensor 28 angeordnet. Dementsprechend weisen der zylindrische Hohlraum des Bauteils 22 und der Temperatursensor 28 einen derartigen Durchmesser auf, dass eine Passung zwischen den beiden beschriebenen Komponenten besteht. Der Hohlraum fungiert als Hülse, nimmt den Temperatursensor idealerweise bündig auf und umschließt ihn. Durch die in Figur 3 gezeigte Ausführung wird eine besonders platzsparende Ausführung der Messvorrichtung realisiert. Das Bauteil 22 kann grundsätzlich aus den Materialien gefertigt sein, die im Zusammenhang mit den Kapillaren gemäß den Figuren 2a bis 2c besprochen wurden. Zur Herstellung einer solchen Kapillare aus Metall eignen sich beispielsweise Metallspritzguss-Verfahren. Dabei wird ein spiralförmig auf einem Kernstück aufgewickelter Polymerdraht mittels Metal Injection Molding mit einem Metall umspritzt, sodass die gewünschte äußere Form des Bauteils, beispielsweise eine zylindrische Form, erhalten wird. Beim darauffolgenden Sintern zersetzt sich der Polymerdraht thermisch und es bleibt der spiralförmige Hohlraum. Alternativ können auch additive Fertigungsverfahren, beispielsweise 3D-Druck, Laserschmelzverfahren etc., zur Herstellung angewendet werden. Auf diese Weise gefertigte Kapillaren bzw. das zylindrische Bauteile weisen Maße auf, deren Bereich bezüglich des Außendurchmessers zwischen 18 und 30 mm und bezüglich der Höhe zwischen 20 und 100 mm liegt. Die weiteren Abmessungen (Länge des Kanals, lichter Durchmesser) entsprechen der in Figur 2a dargestellten Kapillare.

Die duale Messvorrichtung 1 aus Figur 1 weist folgende Funktionsweise auf. Das zu vermessende Gas oder Gasgemisch wird über den Gaseinlass 23.1 in den Hohlraum 21.2 der Kapillare 21 geleitet. Dabei kann eine kontinuierliche Durchleitung erfolgen, wobei das Gas kontinuierlich aus dem Gasauslass 24.1 abgeführt wird. Alternativ kann die Kapillare 21 in einem diskontinuierlichen Verfahren chargenweise mit dem Gas beschickt werden. Die von der Lichtquelle 31 emittierte Strahlung wird über den ersten Lichtleiter 32.1 der optischen Einkopplungsstelle 23.2 zugeleitet, wo die Strahlung in den Hohlraum 21.2 der Kapillare 21 eingekoppelt wird. Die Strahlung durchläuft die gesamte Länge der Kapillare 21, wobei die reflektierende Oberfläche 21.3 einen Austritt aus der Kapillare verhindert. Am Ende der Kapillare 21 gelangt die Strahlung zu der optischen Auskopplungsstelle 23.2, von wo aus sie aus der Kapillare ausgekoppelt wird. Während der Durchströmung der Kapillare 21 kommt es zur Interaktion der elektromagnetischen Strahlung mit den dort befindlichen Gasmolekülen. Insbesondere werden Valenzelektronen der Gasmoleküle auf höhere Energieniveaus angeregt, wodurch es zu einer Absorption von Strahlungsenergie im Bereich der spezifischen Absorptionsbanden der vorhandenen Gasmoleküle kommt. Die aus der Kapillare 21 ausgekoppelte elektromagnetische Strahlung durchläuft den zweiten Lichtleiter 32.2 und wird über den 1x4-Koppler 33.2 in die vier parallelen Zweige geteilt, sodass die elektromagnetische Strahlung auf die vier Detektionseinheiten 34.1, 34.2, 34.3 und 34.4 trifft. Dabei gelangt aufgrund des ersten optischen Filters 35.1 nur Strahlung im Bereich der vorstehend genannten, für Ammoniak NH₃ charakteristischen Durchlassbereiche zur Detektionseinheit 34.1. Auf der anderen Seite gelangt aufgrund des zweiten optischen Filters 35.2 nur Strahlung der vorstehend genannten, für Stickoxid NO charakteristischen Durchlassbereiche zur zweiten Detektionseinheit 34.2. Auf der anderen Seite gelangt aufgrund des dritten optischen Filters 35.3 nur Strahlung des vorstehend genannten, für Stickstoffdioxid NO₂ charakteristischen Durchlassbereichs zur dritten Detektionseinheit 34.3. Hingegen empfängt die vierte Detektionseinheit 34.4 den gesamten Spektralbereich. Die Steuer- und Auswerteeinheit 40 vergleicht die mit der ersten Detektionseinheit 34.1 gemessene Intensität mit einer (in Abhängigkeit von der mit dem Referenzdetektor 34.4 gemessenen Intensität) gespeicherten Intensität, die charakteristisch für die Abwesenheit von Ammoniak NH₃ ist. Sofern Ammoniak im Messgas vorhanden ist, findet eine Absorption in dem entsprechenden Spektralbereich statt, sodass eine vergleichsweise niedrige Intensität durch die erste Detektionseinheit 34.1 gemessen wird. Hieraus ermittelt die Einheit 40 die in dem Messgas vorhandene Konzentration an NH₃, beispielsweise in ppm. In entsprechender Funktionsweise wird über das Signal der zweiten bzw. dritten Detektionseinheiten 34.2 bzw. 34.3 die Konzentrationen von NO bzw. NO₂ ermittelt.

Es versteht sich, dass der erfindungsgemäße optische Sensor nicht auf die Bestimmung von NH₃, NO und NO₂ beschränkt ist. Durch Auswahl der optischen Filter 35 können auch andere Gaskomponenten beispielsweise CO₂, CO, N₂O, N₂O₅, SO₂, Ar, H₂, O₂, CH₄ und andere Kohlenwasserstoffe HC je nach Anwendung ermittelt werden. Auch ist der optische Sensor grundsätzlich geeignet, eine beliebige Anzahl von Gaskomponenten nebeneinander nachzuweisen. Demzufolge ist der Einsatz der erfindungsgemäßen dualen Messvorrichtung nicht auf den Bereich der Verbrennungskraftmaschinen eingeschränkt. Vielmehr kann sie in einer Vielzahl unterschiedlicher Anwendungsgebiete Verwendung finden, wie die Gastinnenraumüberwachung unterschiedlicher Fortbewegungsmittel, die Verwendung in prozess- und verfahrenstechnischen Industrieanlagen, in Gebäuden diverser Nutzungstypen und weiteren Einsatzgebieten, in denen die Messung der Beschaffenheit eines Gases notwendig ist oder verlangt wird.

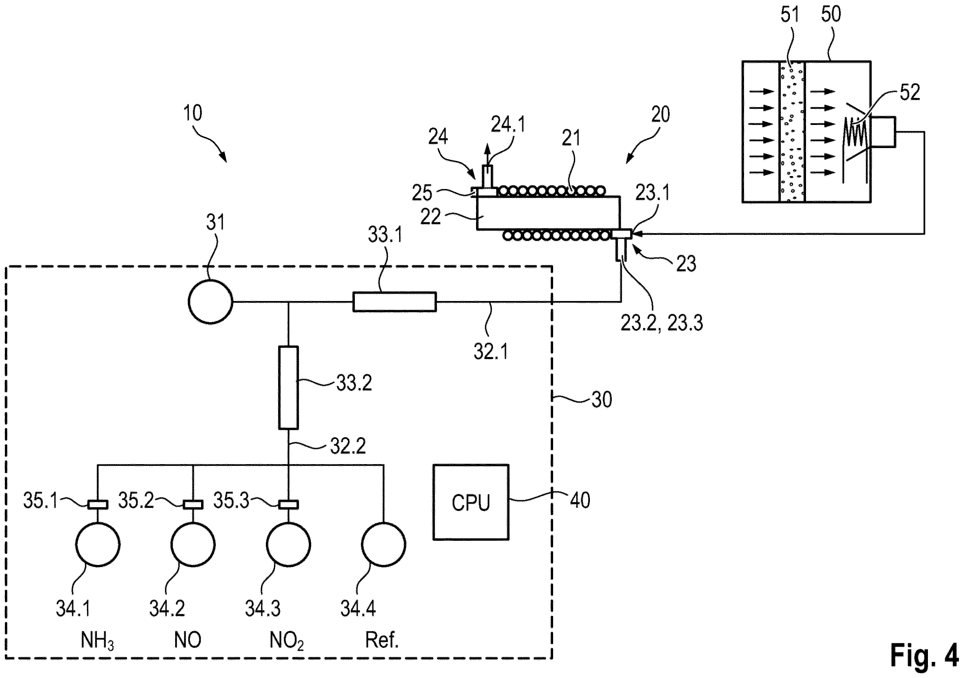

Figur 4 zeigt eine Prinzipdarstellung eines optischen Sensors gemäß einer alternativen Ausführung der vorliegenden Erfindung (Relexionsmodus). Komponenten, die denen der Figur 1 entsprechen, sind mit übereinstimmenden Bezugszeichen bezeichnet und werden nicht nochmals erläutert.

Der Aufbau der Kapillare 21 gleicht dem der in Figur 1 dargestellten Ausführung der Kapillare 21 im Wesentlichen. Sie weist ein erstes und ein zweites Ende auf. Wie in Figur 4 dargestellt, ist an dem ersten Ende (unten rechts in der Darstellung) ein erstes Anschlusselement 23 angeordnet, das im vorliegenden Beispiel als ein T-Stück ausgebildet ist. Das Anschlusselement 23 weist einerseits einen Gaseinlass 23.1 zur Zuführung des zu vermessenden Gases oder Gasgemischs auf. Ferner weist das Anschlusselement 23 eine optische Einkopplungsstelle 23.2 auf, über die eine elektromagnetische Strahlung in den Hohlraum 21.2 der Kapillare 21 eingekoppelt werden kann. An dem zweiten Ende der Kapillare 21 (links oben in der Darstellung) ist ein zweites Anschlusselement 24 angeordnet, das hier ebenfalls die Gestalt eines T-Stücks aufweist. Das zweite Anschlusselement 24 weist einerseits einen Gasauslass 24.1 auf, aus dem das zu vermessende Gas aus dem Hohlraum der Kapillare 21 ausgeleitet werden kann. Die hier gezeigte Ausführungsform unterscheidet sich nun durch den genauen Aufbau des zweiten Anschlusselements 24, an dem ein Spiegel 25 angeordnet ist. Dabei ist der Spiegel 25 so angeordnet, dass die über die optische Einkopplungsstelle 23.2 eingekoppelte elektromagnetische Strahlung bei Auftreffen auf den Spiegel 25 zurück in Richtung der Einkopplungsstelle 23.2 reflektiert wird. Aufgrund dieser Ausgestaltung fungiert der entsprechende Zugang des ersten Anschlusselements 23 gleichzeitig als optische Einkopplungsstelle 23.2 als auch als optische Auskopplungsstelle 23.3.

Die optoelektronische Einheit 30 weist wiederum vier Detektionseinheiten 34 auf. Die Detektionseinheiten 34 sind über einen zweiten Lichtleiter 32.2 mit der optischen Auskopplungsstelle 23.3 verbunden. Gemäß der Ausführung nach Reflexionsmodus, erfolgt eine Zusammenführung des ersten und zweiten Lichtleiters 32.1, 32.2, was über einen 2x1-Koppler 33.1 vermittelt wird. Ferner ist in dem zweiten Lichtleiter 32.2 ein zweiter Koppler nämlich ein 1x4-Koppler 33.2 angeordnet, der wie schon beim Transmissionsmodus gemäß Figur 1 eine Aufspaltung des zweiten Lichtleiters 32.2 in drei parallele Leitungsabschnitte vornimmt, welche zu den entsprechenden Detektionseinheiten 34.1, 34.2, 34.3 und 34.4 führen.

Es ist ersichtlich, dass die grundlegende Funktionsweise der dualen Messvorrichtung 1 von Figur 4 derjenigen gemäß Figur 1 prinzipiell gleicht. Aufgrund des Reflexionsmodus erfolgt allerdings eine Abzweigung von dem Lichtleiter 32.1, da die optischen Ein- und Auskopplungsstellen gemeinsam an einem der beiden Enden der Kapillare ausgeführt sind und dementsprechend abschnittsweise mit einem gemeinsamen Lichtleiter 32.1 ausgestattet sind.

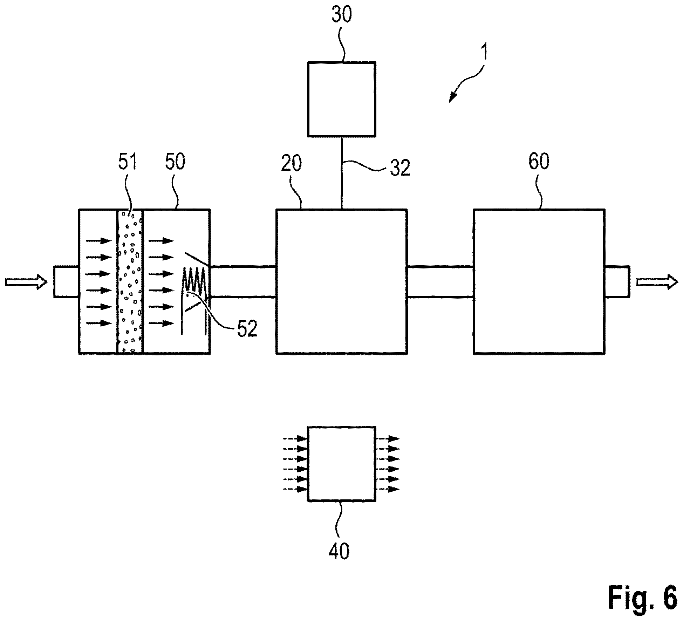

Figur 6 zeigt eine erfindungsgemäße duale Messvorrichtung 1, die als zentrale Komponente die Messzelle 20 und die mit dieser über einen Lichtleiter 32 verbundene optoelektronische Einheit 30 beispielsweise gemäß den Figuren 1 oder 4 aufweist.

Die duale Messvorrichtung 1 weist neben der Messzelle 20 und der optoelektronischen Einheit 30 eine Gaskonditionierungseinheit 50 auf, die der dualen Messvorrichtung 1 in Strömungsrichtung des zu vermessenden Gases strömungstechnisch vorgeschaltet ist. Die Gaskonditionierungseinheit 50 dient im Wesentlichen der Vorreinigung des der Kapillare 21 zugeführten Gases. Dabei weist die Einheit 50 im dargestellten Beispiel ein vom Gas durchströmbares Reinigungselement 51, insbesondere einen Filter auf, der partikuläre Bestandteile zurückhält. Das so gefilterte Gas trifft dann auf ein Heizelement 52, durch welches eine Entzündung und Verbrennung (Abfackelung) bestimmter Gaskomponenten erfolgt. Von dort strömt das so vorgereinigte Gas in die Messzelle 20 und insbesondere in die zuvor beschriebene Kapillare 21. Dort findet in der zuvor beschriebenen Vorgehensweise die spektroskopische Auswertung statt. Wie bereits erwähnt, kann dieses in einer kontinuierlichen Vorgehensweise erfolgen, bei welcher das Gas kontinuierlich durch die Messzelle 20 geleitet und vermessen wird. Alternativ erfolgt gemäß einem diskontinuierlichen Ansatz eine chargenweise Befüllung und Vermessung des Gases. Nach Austritt aus der Messzelle 20 strömt das Gas in einen Ausgangsbereich, von wo es über eine Abfuhrleitung aus der duale Messvorrichtung 1 entlassen wird. Durch den Kontakt der Sensorspitze 28.2 des Temperatursensors 28 wird zur selben Zeit und am selben Ort die Temperatur des Gases erfasst. Dabei kann der Kontakt der Sensorspitze 28.2 mit dem Gas auf vielfältige Weisen realisiert werden, beispielsweise kann die Spitze in eine Gasleitung hineinreichen oder es wird ein Teil des Gases, das zum Gaseinlass 23 transportiert wird, an der Spitze vorbeigeführt.

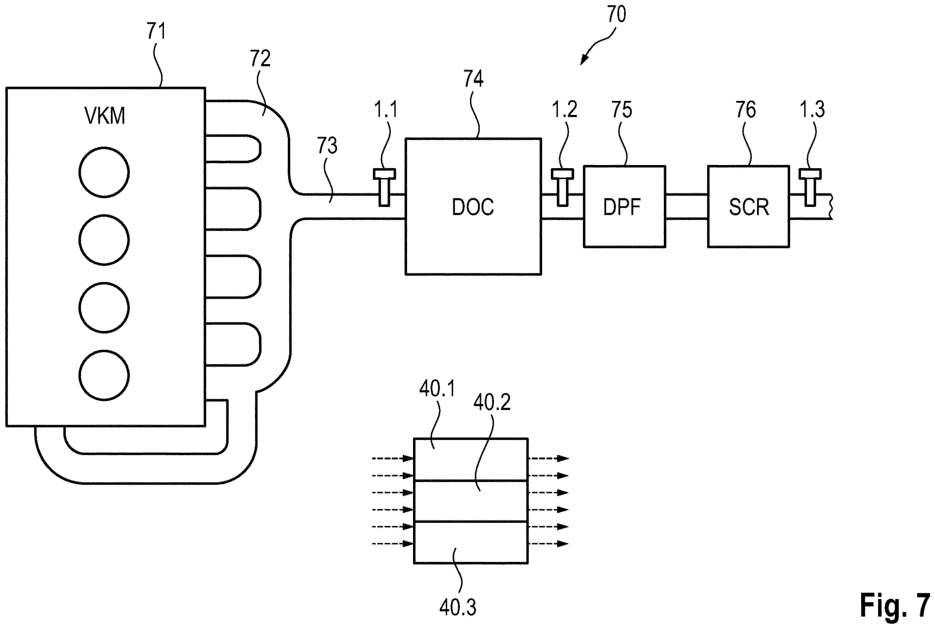

In Figur 7 ist eine bevorzugte Anwendung der erfindungsgemäßen dualen Messvorrichtung 1 dargestellt, nämlich in einem Abgastrakt eines Fortbewegungsmittels 70. Das Fortbewegungsmittels 70 umfasst einen Verbrennungsmotor 71, bei dem es sich im vorliegenden Beispiel um einen Dieselmotor handelt. Ein von dem Verbrennungsmotor 71 erzeugtes Abgas gelangt über einen Abgaskrümmer 72 in einen Abgaskanal 73. In diesem sind verschiedene Abgasreinigungskomponenten zur Reinigung des verbrennungsmotorischen Abgases angeordnet. Diese umfassen im gezeigten Beispiel einen Oxidationskatalysator 74, der eine Oxidation von unverbrannten Kohlenwasserstoffen HC sowie von Kohlenmonoxid CO vornimmt. Ein nachgeschalteter Dieselpartikelfilter 75 hält partikuläre Bestandteile, insbesondere Ruß, mechanisch zurück. Dem Partikelfilter 75 ist ein SCR-Katalysator 76 nachgeschaltet, der in an sich bekannter Weise eine selektive katalytische Reduktion von Stickoxiden NOₓ vornimmt. Stromauf des Oxidationskatalysators 74 ist eine erste duale Messvorrichtung 1.1 gemäß der vorliegenden Erfindung angeordnet. Diese ist beispielsweise ausgebildet, um die Gaskomponenten CO, NO, NO₂, CH₄ und O₂ zu detektieren und mengenmäßig zu bestimmen. Stromab des Oxidationskatalysators 74 ist eine zweite duale Messvorrichtung 1.2 angeordnet, die die gleichen Komponenten wie die duale Messvorrichtung 1.1 detektiert, insbesondere aber CO und CH₄, um die Performance des Oxidationskatalysators 74 zu überwachen. Schließlich ist stromab des SCR-Katalysators 76 eine weitere duale Messvorrichtung 1.3 angeordnet, die insbesondere zur Detektion von verschiedenen Stickoxiden wie NO und NO₂ sowie von Ammoniak NH₃ ausgebildet ist. Parallel wird durch die dualen Messvorrichtungen auch die Temperatur erfasst und es entfällt die Notwendigkeit separater Temperatursensoren bzw. im umgekehrten Fall die Notwendigkeit des separaten Einsatzes von Sensoren zur Detektion des Gases.

Die Steuerung und Auswertung der Sensoren 1.1, 1.2 und 1.3 erfolgt wiederum über elektronische Steuer- und Auswerteeinheiten 40. Gemäß der gezeigten Ausführung weist jede der dualen Messvorrichtungen eine eigene Steuer- und Auswerteeinheit auf. Dabei ist die Steuereinheit 40.1 der ersten dualen Messvorrichtung 1.1 zugeordnet, die zweite Steuereinheit 40.2 der zweiten dualen Messvorrichtung 1.2 und die dritte Steuereinheit 40.3 der dritten dualen Messvorrichtung 1.3. Alternativ steuert ein einziges Multiplex-Steuergerät sämtliche der vorhandenen dualen Messvorrichtungen.

Es sei darauf hingewiesen, dass die erfindungsgemäße duale Messvorrichtung nicht nur in einem Fahrzeug eingesetzt werden kann, sondern in beliebigen Einsatzbereichen, in denen eine qualitative und/oder quantitative Detektion von Gasen und Temperaturmessung erforderlich ist. Mögliche Einsatzgebiete sind beispielsweise die Messung von Gasanteilen in Klimakompressoren, die Messung von unerwünschten Gasaustritten aus Batteriemodulen, die Messung von Gasen, beispielsweise CO in einem Fahrzeuginnenraum, Einsätze in Flugzeugen, Hubschraubern, Verbrennungsindustrieanlagen, Biogasanlagen oder Tankstellen sowie parallel dazu die Messung der Temperaturen.

Dier erfindungsgemäße dualen Messvorrichtung zeichnet sich durch folgende vorteilhafte Eigenschaften aus:
- Hohe Widerstandsfähigkeit in problematischen Umgebungen,
- Eignung zur Messung einer Vielzahl verschiedener Gaskomponenten auch nebeneinander,
- Hohe Empfindlichkeit,
- Kurze Ansprechzeiten,
- Niedrige Kosten,
- Direkte Messmethode,
- Hohe Zuverlässigkeit (keine Beeinflussung durch Funkenbildung, Kurzschluss, EMI-, RF- und HV-Störungen),
- Kompakte und einfache Bauweise.

### Bezugszeichenliste

- 1: Duale Messvorrichtung
- 1.1: erste duale Messvorrichtung
- 1.2: zweite duale Messvorrichtung
- 1.3: dritte duale Messvorrichtung
- 10: Gassensor zur Detektion eines Gases
- 20: Messzelle
- 21: Kapillare
- 21.1: Kapillarwand
- 21.2: Hohlraum
- 21.3: reflektierende Oberfläche / reflektierende Beschichtung
- 22: Trägerkern
- 23: erstes Anschlusselement / T-Stück
- 23.1: Gaseinlass
- 23.2: optische Einkopplungsstelle
- 23.3: optische Auskopplungsstelle
- 24: zweites Anschlusselement / T-Stück
- 24.1: Gasauslass
- 25: Spiegel
- 26: Gehäuse
- 27: Trägerteil
- 28: Temperatursensor
- 28.1: Mantel
- 28.2: Sensorspitze
- 28.3: Sensorleitung
- 30: optoelektronische Einheit
- 31: Lichtquelle
- 32.1: erster Lichtleiter / Glasfaser
- 32.2: zweiter Lichtleiter / Glasfaser
- 33.1: 2x1-Koppler
- 33.2: 1x4-Koppler
- 34.1: erste Detektionseinheit / erste Fotodiode
- 34.2: zweite Detektionseinheit / zweite Fotodiode
- 34.3: dritte Detektionseinheit / dritte Fotodiode
- 34.4: vierte Detektionseinheit / vierte Fotodiode
- 35.1: erster optischer Filter / erster Interferenzfilter
- 35.2: zweiter optischer Filter / zweiter Interferenzfilter
- 35.3: dritter optischer Filter / dritter Interferenzfilter
- 40: elektronische Steuer- und Auswerteeinheit
- 50: Gaskonditionierungseinheit
- 51: Reinigungselement / Filter
- 52: Heizelement
- 60: Ausgangsbereich
- 70: Fahrzeug
- 71: Verbrennungsmotor
- 72: Abgaskrümmer
- 73: Abgaskanal
- 74: Oxidationskatalysator
- 75: Dieselpartikelfilter
- 76: SCR-Katalysator

## Patentansprüche

1. Duale Messvorrichtung (1) zur Bestimmung der Beschaffenheit eines Gases umfassend:
(a) einen Gassensor (10) zur Detektion mindestens einer Gaskomponente des Gases, umfassend:
eine spiralförmige Kapillare (21) mit einer Kapillarwand (21.1) und mit einem Hohlraum (21.2), wobei die Kapillarwand (21.1) ausgebildet ist, ein Austreten von elektromagnetischer Strahlung zu unterdrücken,
einen an einem ersten Ende der Kapillare (21) angeordneten Gaseinlass (23.1) und einen an einem zweiten Ende der Kapillare (21) angeordneten Gasauslass (24.1), sodass der Hohlraum (21.2) mit dem zu messenden Gas befüllbar und/oder von einem solchen durchströmbar ist,
eine optische Einkopplungsstelle (23.2), die ausgebildet ist, eine elektromagnetische Strahlung in den Hohlraum (21.2) der Kapillare (21) einzukoppeln, und eine optische Auskopplungsstelle (23.3), die ausgebildet ist, die elektromagnetische Strahlung aus der Kapillare (21) auszukoppeln, wobei die Einkopplungsstelle (23.2) und die Auskopplungsstelle (23.3) gemeinsam an dem ersten oder zweiten Ende der Kapillare (21) oder separat voneinander an den gegenüberliegenden Enden der Kapillare (21) ausgebildet sind, und
(b) einen Temperatursensor (28) zur Messung einer Temperatur des Gases, wobei der Temperatursensor (28) innerhalb eines von der Kapillare (21) umwickelten Volumens angeordnet ist.

2. Duale Messvorrichtung (1) nach Anspruch 1, ferner umfassend ein Gehäuse (26), das den Temperatursensor (28) und/oder die Kapillare (21) zumindest teilweise umgibt.

3. Duale Messvorrichtung (1) nach einem der vorhergehenden Ansprüche, ferner umfassend ein Trägerteil (27), das ausgebildet ist, den Temperatursensor (28) aufzunehmen.

4. Duale Messvorrichtung (1) nach Anspruch 3, wobei das Trägerteil (27) als Durchführung für den Temperatursensor (28) und/oder die Kapillare (21) ausgeführt ist.

5. Duale Messvorrichtung (1) nach einem der vorhergehenden Ansprüche, wobei die Kapillare (21) eine auf einer Innenseite oder Außenseite der Kapillarwand (21.1) angeordnete reflektierende Oberfläche (21.3) aufweist, die dem Hohlraum (21.2) zugewandt ist.

6. Duale Messvorrichtung (1) nach einem der vorhergehenden Ansprüche, ferner umfassend eine Gaskonditionierungseinheit (50) zur Vorreinigung des der Kapillare (21) zuzuführenden Gases.

7. Duale Messvorrichtung (1) nach einem der vorhergehenden Ansprüche, ferner umfassend einen Trägerkern (22), um den die Kapillare (21) spiralförmig gewickelt ist, wobei der Temperatursensor (28) innerhalb des Trägerkerns (22) angeordnet ist oder den Trägerkern (22) ganz oder teilweise ausbildet.

8. Duale Messvorrichtung (1) nach einem der vorhergehenden Ansprüche, wobei die Einkopplungsstelle (23.2) und die Auskopplungsstelle (23.3) gemeinsam an dem ersten oder zweiten Ende der Kapillare (21) ausgebildet sind und an dem der Einkopplungsstelle (23.2) und Auskopplungsstelle (23.3) gegenüberliegenden Ende der Kapillare (21) ein Spiegel (25) angeordnet ist, der die auftreffende elektromagnetische Strahlung in Richtung der Einkopplungsstelle (23.2) reflektiert.

9. Duale Messvorrichtung (1) nach einem der vorhergehenden Ansprüche, ferner umfassend eine Lichtquelle (31), insbesondere eine polychromatische Lichtquelle, zur Emission der elektromagnetischen Strahlung, die über einen Lichtleiter (32) mit der optischen Einkopplungsstelle (23.2) verbunden ist.

10. Duale Messvorrichtung (1) nach einem der vorhergehenden Ansprüche, ferner umfassend zumindest eine für die elektromagnetische Strahlung empfindliche Detektionseinheit (34), insbesondere Fotodiode, zur Umwandlung der elektromagnetischen Strahlung in ein elektrisches Signal, wobei die Detektionseinheit (34) über einen Lichtleiter (32) mit der optischen Auskopplungsstelle (23.3) verbunden ist.

11. Duale Messvorrichtung (1) nach Anspruch 10, ferner umfassend einen zwischen der optischen Auskopplungsstelle (23.3) und der jeweiligen Detektionseinheit (34) angeordneten optischen Filter (35), insbesondere Interferenzfilter, der ausgebildet ist, einen vorbestimmten spektralen Bereich selektiv passieren zu lassen.

12. Duale Messvorrichtung (1) nach Anspruch 10 und 11, umfassend eine Mehrzahl von Detektionseinheiten (34.1, 34.2) mit jeweils einem vorgeschalten optischen Filter (35.1, 35.2), wobei die optischen Filter (35.1, 35.2) ausgebildet sind, unterschiedliche vorbestimmte spektrale Bereiche selektiv passieren zu lassen.

13. Verwendung einer dualen Messvorrichtung (1) nach einem der Ansprüche 1 bis 12 in einem Fortbewegungsmittel (70), insbesondere in einem Abgastrakt und/oder einem Innenraum und/oder einem Brennstoffzellensystem des Fortbewegungsmittels.

14. Fortbewegungsmittel (70) umfassend mindestens eine duale Messvorrichtung (1) nach einem der Ansprüche 1 bis 12, wobei die mindestens eine duale Messvorrichtung (1) in einem Abgastrakt und/oder einem Innenraum und/oder einem Brennstoffzellensystem des Fortbewegungsmittels angeordnet ist.

## Claims

1. Dual measurement apparatus (1) for determining the nature of a gas, comprising:
(a) a gas sensor (10) for detecting at least one gas component of the gas, comprising:
a helical capillary (21) having a capillary wall (21.1) and having a cavity (21.2), wherein the capillary wall (21.1) is configured to suppress an emergence of electromagnetic radiation,
a gas inlet (23.1) arranged at a first end of the capillary (21) and a gas outlet (24.1) arranged at a second end of the capillary (21), such that the gas to be measured may be filled into and/or flow through the cavity (21.2),
an optical incoupling point (23.2), which is configured to couple electromagnetic radiation into the cavity (21.2) of the capillary (21), and an optical outcoupling point (23.3), which is configured to couple the electromagnetic radiation out of the capillary (21), wherein the incoupling point (23.2) and the outcoupling point (23.3) are together formed at the first or second end of the capillary (21) or are formed separately from each other at the opposing ends of the capillary (21), and
(b) a temperature sensor (28) for measuring a temperature of the gas, wherein the temperature sensor (28) is arranged within a volume around which the capillary (21) is wound.

2. Dual measurement apparatus (1) according to Claim 1, further comprising a housing (26), which at least partially surrounds the temperature sensor (28) and/or the capillary (21).

3. Dual measurement apparatus (1) according to either of the preceding claims, further comprising a carrier part (27), which is configured to hold the temperature sensor (28).

4. Dual measurement apparatus (1) according to Claim 3, wherein the carrier part (27) is configured as a passage for the temperature sensor (28) and/or the capillary (21).

5. Dual measurement apparatus (1) according to any of the preceding claims, wherein the capillary (21) has a reflective surface (21.3), which is arranged on an inner side or outer side of the capillary wall (21.1) and faces the cavity (21.2).

6. Dual measurement apparatus (1) according to any of the preceding claims, further comprising a gas conditioning unit (50) for pre-cleaning the gas to be fed into the capillary (21).

7. Dual measurement apparatus (1) according to any of the preceding claims, further comprising a carrier core (22) around which the capillary (21) is helically wound, wherein the temperature sensor (28) is arranged within the carrier core (22) or entirely or partially forms the carrier core (22).

8. Dual measurement apparatus (1) according to any of the preceding claims, wherein the incoupling point (23.2) and the outcoupling point (23.3) are formed together at the first or second end of the capillary (21) and a mirror (25) is arranged at the end of the capillary (21) located opposite the incoupling point (23.2) and outcoupling point (23.3), the mirror reflecting the incident electromagnetic radiation towards the incoupling point (23.2).

9. Dual measurement apparatus (1) according to any of the preceding claims, further comprising a light source (31), in particular a polychromatic light source, for emitting the electromagnetic radiation, which is connected via a light guide (32) to the optical incoupling point (23.2).

10. Dual measurement apparatus (1) according to any of the preceding claims, further comprising at least one detection unit (34) sensitive to the electromagnetic radiation, in particular a photodiode, for converting the electromagnetic radiation into an electrical signal, wherein the detection unit (34) is connected via a light guide (32) to the optical outcoupling point (23.3).

11. Dual measurement apparatus (1) according to Claim 10, further comprising an optical filter (35), in particular an interference filter, which is arranged between the optical outcoupling point (23.3) and the respective detection unit (34) and is configured to selectively allow a predetermined spectral range to pass.

12. Dual measurement apparatus (1) according to Claims 10 and 11, comprising a plurality of detection units (34.1, 34.2) each having an optical filter (35.1, 35.2) connected upstream thereof, wherein the optical filters (35.1, 35.2) are configured to selectively allow different predetermined spectral ranges to pass.

13. Use of a dual measurement apparatus (1) according to any of Claims 1 to 12 in a means of transport (70), in particular in an exhaust tract and/or an interior space and/or a fuel cell system of the means of transport.

14. Means of transport (70) comprising at least one dual measurement apparatus (1) according to any of Claims 1 to 12, wherein the at least one dual measurement apparatus (1) is arranged in an exhaust tract and/or an interior space and/or a fuel cell system of the means of transport.

## Revendications

1. Dispositif de mesure double (1) pour déterminer la qualité d'un gaz, comprenant :
(a) un capteur de gaz (10) destiné à détecter au moins une composante gazeuse du gaz, comprenant :
un capillaire (21) en forme de spirale, pourvu d'une paroi de capillaire (21.1) et pourvu d'un espace creux (21.2), la paroi de capillaire (21.1) étant configurée pour inhiber une fuite de rayonnement électromagnétique,
une entrée de gaz (23.1) disposée à une première extrémité du capillaire (21) et une sortie de gaz (24.1) disposée à une deuxième extrémité du capillaire (21), de sorte que l'espace creux (21.2) peut être rempli du gaz à mesurer et/ou peut être traversé par un courant de celui-ci,
un point d'injection optique (23.2), qui est configuré pour injecter un rayonnement électromagnétique dans l'espace creux (21.2) du capillaire (21), et un point d'extraction optique (23.3), qui est configuré pour extraire le rayonnement électromagnétique hors du capillaire (21), le point d'injection (23.2) et le point d'extraction (23.3) étant formés en commun au niveau de la première ou de la deuxième extrémité du capillaire (21) ou séparément l'un de l'autre aux extrémités opposées du capillaire (21), et
(b) un capteur de température (28) destiné à mesurer une température du gaz, le capteur de température (28) étant disposé à l'intérieur d'un volume enveloppé par le capillaire (21).

2. Dispositif de mesure double (1) selon la revendication 1, comprenant en outre un boîtier (26), qui entoure au moins partiellement le capteur de température (28) et/ou le capillaire (21).

3. Dispositif de mesure double (1) selon l'une des revendications précédentes, comprenant en outre une partie porteuse (27) qui est configurée pour accueillir le capteur de température (28).

4. Dispositif de mesure double (1) selon la revendication 3, la partie porteuse (27) étant réalisé en tant que traversée pour le capteur de température (28) et/ou le capillaire (21).

5. Dispositif de mesure double (1) selon l'une des revendications précédentes, le capillaire (21) possédant une surface réfléchissante (21.3), qui fait face à l'espace creux (21.2), disposée sur un côté intérieur ou un côté extérieur de la paroi de capillaire (21.1).

6. Dispositif de mesure double (1) selon l'une des revendications précédentes, comprenant en outre une unité de conditionnement de gaz (50) destinée à prépurifier le gaz à acheminer au capillaire (21).

7. Dispositif de mesure double (1) selon l'une des revendications précédentes, comprenant en outre un noyau porteur (22) autour duquel le capillaire (21) est enroulé en forme de spirale, le capteur de température (28) étant disposé à l'intérieur du noyau porteur (22) ou formant entièrement ou partiellement le noyau porteur (22).

8. Dispositif de mesure double (1) selon l'une des revendications précédentes, le point d'injection (23.2) et le point d'extraction (23.3) étant formés en commun au niveau de la première ou de la deuxième extrémité du capillaire (21) et un miroir (25) qui réfléchit le rayonnement électromagnétique incident en direction du point d'injection (23.2) étant disposé à l'extrémité du capillaire (21) opposée au point d'injection (23.2) et au point d'extraction (23.3).

9. Dispositif de mesure double (1) selon l'une des revendications précédentes, comprenant en outre une source de lumière (31), notamment une source de lumière polychromatique, destinée à l'émission du rayonnement électromagnétique, laquelle est reliée au point d'injection optique (23.2) par le biais d'une fibre optique (32).

10. Dispositif de mesure double (1) selon l'une des revendications précédentes, comprenant en outre au moins une unité de détection (34) sensible au rayonnement électromagnétique, notamment une photodiode, destinée à convertir le rayonnement électromagnétique en un signal électrique, l'unité de détection (34) étant reliée au point d'extraction optique (23.3) par le biais d'une fibre optique (32).

11. Dispositif de mesure double (1) selon la revendication 10, comprenant en outre un filtre optique (35), notamment un filtre d'interférence, disposé entre le point d'extraction optique (23.3) et l'unité de détection (34) respective, lequel est configuré pour laisser passer sélectivement une plage spectrale prédéterminée.

12. Dispositif de mesure double (1) selon les revendications 10 et 11, comprenant une pluralité d'unités de détection (34.1, 34.2) respectivement pourvues d'un filtre optique (35.1, 35.2) monté en amont, les filtres optiques (35.1, 35.2) étant configurés pour laisser passer sélectivement des plages spectrales prédéterminées différentes.

13. Utilisation d'un dispositif de mesure double (1) selon l'une des revendications 1 à 12 dans un moyen de transport (70), notamment dans un trajet d'échappement et/ou un espace intérieur et/ou un système de pile à combustible du moyen de transport.

14. Moyen de transport (70) comprenant au moins un dispositif de mesure double (1) selon l'une des revendications 1 à 12, l'au moins un double dispositif de mesure (1) étant disposé dans un trajet d'échappement et/ou un espace intérieur et/ou un système de pile à combustible du moyen de transport.
